# EUROPÄISCHE PATENTANMELDUNG

(11) **EP 3 934 194 A1**
(43) Veröffentlichungstag der Anmeldung: **05.01.2022**
(21) Anmeldenummer: 20183033.8
(22) Anmeldetag: 30.06.2020
(51) Int. Cl.: H04L 29/06, H04L 29/08

(54) **VORRRICHTUNGEN, COMPUTERIMPLEMENTIERTES VERFAHREN UND COMPUTERPROGRAMMPRODUKT ZUM IDENTIFIZIEREN EINES DIGITALEN ZWILLINGS FÜR EIN OBJEKT**

(71) Anmelder: Siemens Aktiengesellschaft, 80333 München (DE)
(72) Erfinder: Jetzfellner, Thomas, 85609 Aschheim (DE); Morra, Carlos, 81541 München (DE)

(57) **Zusammenfassung**

Die Erfindung betrifft ein Ökosystem von Geräten, die mittels einer Blockkette oder Netzwerkapplikation miteinander autonom interagieren. Insbesondere wird mittels der Erfindung mit einer verteilten Infrastruktur eine sicherheitsgeschützte Datenverarbeitung von Sensordaten oder Messdaten für ein Objekt realisiert. Anwendungsgebiete sind hierbei Supply-Chain-Szenarien oder industrielle Steueranwendungen von Blockketten.

## Beschreibung

Die Erfindung bezieht sich auf Verfahren, Vorrichtungen und ein System zum sicherheitsgeschützten Bereitstellen von Datensätzen, wobei die Datensätze beispielsweise Sensordaten umfassen.

Eine immer stärkere Vernetzung von Smart-Geräten (z. B. Mobiltelefonen, Smartwatches) oder Fertigungsanlagen führt dazu, dass mehr und mehr Sensordaten von diesen Smart-Geräten und Fertigungsanlagen erfasst werden. Insbesondere soll mit diesen Daten beispielsweise eine Fertigung oder auch der Transport von Objekten (z. B. Werkstücken, Nahrungsmittel usw.) überwacht werden.

Nachfolgend werden Aspekte der Erfindung erläutert.

Die Technologie von Blockketten (engl. Blockchains) bzw. "Distributed Ledgers" ist aktuell eine intensiv diskutierte Technologie, die insbesondere als verteiltes Datenbanksystem oder als Netzwerkapplikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gerät zum Identifizieren eines zu einem Objekt zugehörigen digitalen Zwillings aufweisend:
- ein Erfassungsmodul (110) zum Erfassen individueller Merkmale (M) eines Objektes (O) mittels eines Erfassungsgerätes (A);
- ein Selektionsmodul (120) zum Auswählen eines digitalen Zwillings, wobei
   - die individuellen Merkmale mit einem entsprechenden Referenzwert verglichen werden,
   - bei einer ausreichend genauen Übereinstimmung des Referenzwertes mit den individuellen Merkmalen ein dem Referenzwert zugeordneter digitaler Zwilling ausgewählt wird,
   - beispielsweise bei einer ausreichend genauen Übereinstimmung des Referenzwertes mit den individuellen Merkmalen der digitale Zwilling bereitgestellt wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen. "Computerimplementiert" bedeutet beispielsweise, dass das Verfahren bzw. dessen Verfahrensschritte durch einen Prozessor oder durch mehrere Prozessoren ausgeführt wird.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder einer Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transaktionen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems oder der Netzwerkapplikation sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems (oder der Netzwerkapplikation) bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems (oder der Netzwerkapplikation) möglichst gering zu halten.

Unter "sicherheitsgeschützt" oder "kryptographisch geschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerkapplikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerkapplikation) verweisen bzw. diese referenzieren [1][4][5].

Unter "Einfügen in das verteilte Datenbanksystem (oder in eine Netzwerkapplikation)" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems (oder einer Netzwerkapplikation) übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems (oder der Netzwerkapplikation) verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerkapplikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden. Entsprecht ist beispielsweise eine Nachricht eine Transaktion, wobei die Nachricht beispielsweise Steuerbefehle zum Ansteuern der Geräte umfasst und/oder auch Voraussetzungen (z. B. vorgegebene Anforderungen) für das Ausführen der Steuerbefehle umfasst.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems/der Netzwerkapplikation) oder die entsprechende Transaktion (des verteilten Datenbanksystems/der Netzwerkapplikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem (oder in eine Netzwerkapplikation)" erläutert ist.

Unter einem "Programmcode" (z. B. ein Smart-Contract oder auch Chain-Code genannt) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem (oder durch die Netzwerkapplikation) ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems (oder der Netzwerkapplikation) ausgeführt [4][5]. Dabei wird beispielsweise eine virtuelle Maschine durch die Infrastruktur des verteilten Datenbanksystems (oder der Netzwerkapplikation) realisiert.

Unter einem "Smart Contract" (oder auch Chain-Code genannt) kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) oder einer Netzwerkapplikation gespeichert, beispielsweise in einem Datenblock des verteilten Datenbanksystems oder der Netzwerkapplikation. Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" bzw. ein "Smart-Contract" kann im Zusammenhang mit der Erfindung insbesondere auch ein Ausführen eines Programmcodes bzw. eines Smart-Contracts in einem Prozess durch das verteilte Datenbanksystem bzw. deren Infrastruktur verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerkapplikation" kann beispielsweise ein verteiltes Datenbanksystem oder eine verteilte Kommunikations

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette (z. B. Hyperledger) oder einem distributed ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil (oder alle Teile) seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerk-Applikation kann es sich beispielsweise um ein öffentliches verteiltes Datenbanksystem oder eine ein öffentliche Netzwerk-Applikation (z. B. eine öffentliche Blockkette) oder ein geschlossenes (oder privates) verteiltes Datenbanksystem oder eine geschlossene Netzwerk-Applikation (z. B. eine private Blockkette) handeln.

Handelt es sich beispielsweise um ein öffentliches verteiltes Datenbanksystem oder eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerk-Applikation beitreten zu können bzw. von diesem akzeptiert zu werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass Kanten (vorzugsweise alle Kanten) die gleiche Richtung (vorzugsweise immer die gleiche Richtung) haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten zu können bzw. um von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein. Alternativ oder zusätzlich kann die Erfindung beispielsweise auch mittels einer Peer-2-Peer Applikation anstelle des verteilten Datenbanksystems realisiert werden.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) oder einer Netzwerk-Applikation verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems (oder einer Netzwerk-applikation)" kann im Zusammenhang mit der Erfindung beispielsweise der Datenblock des verteilten Datenbanksystems (oder der Netzwerkapplikation) verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems (oder der Netzwerkapplikation) verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems oder einer Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen einer Netzwerk-Applikation oder eines verteilten Datenbanksystems bzw. deren Datenblöcke ausführen oder neue Datenblöcke mit neuen Transaktionen in das verteilte Datenbanksystem (oder in die Netzwerk-Applikation) mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems (oder der Netzwerk-Applikation) sind. Dabei können die Geräte beispielsweise Feldgeräte sein oder Geräte im Internet der Dinge sein, die insbesondere auch ein Knoten des verteilten Datenbanksystems (oder der Netzwerk-Applikation) sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse), elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst) oder eine Kombination der genannten Möglichkeiten. Das Sicherheitsmodul kann dabei beispielsweise kryptographische Schlüssel oder ein Geheimnis (z. B. eine Zeichenfolge) umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server verstanden werden, die jeweils außerhalb der Blockkette angeordnet sind und kein Teil der Infrastruktur des verteilten Datenbanksystems (oder der Netzwerk-Applikation) sind bzw. eine separate getrennte Infrastruktur bilden. Bei einem Gerät handelt es sich beispielsweise um ein Fertigungsgerät und/oder ein elektromechanisches Gerät und/oder ein elektronisches Gerät und/oder ein Gerät eines Automatisierungsnetzwerkes (z. B. für industrielle technische Anlagen, Fertigungsanlagen, Energie- bzw. Ressourcenverteilungsanlagen), diese Geräte sind insbesondere nicht in der Lage direkt mit dem verteilten Datenbanksystem (direkt) oder der Netzwerk-Applikation zu kommunizieren.

Ein solches Gerät außerhalb des verteilten Datenbanksystems (oder der Netzwerk-Applikation) kann beispielsweise nicht auf die Daten des verteilten Datenbanksystems (oder der Netzwerk-Applikation) zugreifen, da das Gerät beispielsweise zu alt ist und weder über die notwendigen kryptographischen und/oder IT-Security-Fähigkeiten verfügt noch mit dem Datenformat des verteilten Datenbanksystems (oder der Netzwerk-Applikation) kompatibel ist.

Ein Gerät kann beispielsweise auch ein Knoten einer Netzwerk-applikation oder eines verteilten Datenbanksystems sein.

Unter einem "separaten und/oder direkten Kommunikationskanal" kann im Zusammenhang mit der Erfindung beispielsweise eine Datenübertragung (z. B. ein Senden, ein Empfangen, ein Übertragen, ein Bereitstellen oder ein Übermitteln) mittels eines Kommunikationskanals verstanden werden. Beispielsweise können über diesen Kanal Transaktionen/Nachrichten schneller verschickt werden und eine Bestätigung über diesen Datenaustausch im verteilten Datenbanksystem gespeichert werden. Damit können beispielsweise wichtige und/oder zeitkritische Transaktionen bzw. Nachrichten (z. B. Steuerbefehle bzw. Steuertransaktionen) mit höherer Geschwindigkeit an ein entsprechendes Ziel (z. B. ein Gerät) übertragen werden und dabei z. B. die langsamere Datenübertragung des verteilten Datenbanksystems (z. B. bei der Replikation der Datenblöcke/Transaktionen) vermieden werden. Beispielsweise können für die Erfindung und die genannten Aspekte, Ausführungsbeispiele, Ausführungsformen der Erfindung und ihre Varianten für eine Datenübertragung zwischen einem Gerät (und/oder Knoten) ein separater und/oder direkter Kommunikationskanal aufgebaut werden. Beispielsweise werden bei einem direkten Kommunikationskanal die Transaktionen/Nachrichten direkt zwischen einem Sender (z. B. das (erste) und einem Empfänger/Ziel (z. B. das Gerät, das die Steuerbefehle ausführen, verarbeiten oder auswerten soll) ausgetauscht ohne, dass weitere Knoten und/oder Geräte des verteilten Datenbanksystems in diesem Datenaustausch involviert sind. Hingegen können bei einem separaten Kommunikationskanal Knoten und/oder Geräte des verteilten Datenbanksystems beispielsweise in den Datenaustausch involviert sein. Wurde der separate und/oder direkte Kommunikationskanal erfolgreich zwischen dem Sender und dem Empfänger aufgebaut (es wurde also hierdurch insbesondere eine Kommunikationsverbindung etabliert), so können Daten beispielsweise in Form von Transaktionen oder Nachrichten zwischen dem Sender und dem Empfänger ausgetauscht werden. Wird beispielsweise der Kommunikationskanal geschlossen/beendet (also es wird insbesondere eine Kommunikationsverbindung beendet) so wird beispielsweis ein Ergebnis der Datenübertragung z. B. in Form von Transaktionen (z. B. als eine Übertragungsbestätigungstransaktion oder Bestätigungstransaktion) in dem verteilten Datenbanksystem gespeichert (z. B. in Datenblöcken des verteilten Datenbanksystems). Das Ergebnis der Datenübertragung kann beispielsweise eine Bestätigung der Übertragung oder des Empfangs der entsprechenden Transaktionen/Nachrichten sein und/oder ein Analyseergebnis und/oder die letzte übertragene Transaktion/Nachricht, die über den separaten und/oder direkten Kommunikationskanal übertragen wurde bevor der Kommunikationskanal geschlossen wurde. Das Speichern der Transaktion mit dem Ergebnis kann beispielsweise durch den Sender und/oder Empfänger erfolgen. Bei dem Analyseergebnis kann es sich beispielsweise um die Bestätigung des Empfangs der Nachricht/Transaktion sein und/oder, dass die Nachricht/Transaktion und z. B. deren Steuerbefehle vom Ziel/Empfänger verarbeitet werden können (z. B. eine Bestätigung der Ausführbarkeit durch das Ziel). Dies kann beispielsweise wiederum in einer Transaktion (z. B. in einer Ausführbarkeitsbestätigungstransaktion) gespeichert werden. Alternativ oder zusätzlich wird die Ausführbarkeitsbestätigungstransaktion in dem verteilten Datenbanksystem gespeichert. Die Ausführbarkeitsbestätigungstransaktion umfasst dabei beispielsweise einen eindeutigen Identifizierer für das Gerät, das in der Lage ist die Steuerbefehle auszuführen und/oder kann beispielsweise angeben, wann die Steuerbefehle der Nachricht/Transaktion spätestens ausgeführt werden. Alternativ oder zusätzlich umfasst die Ausführbarkeitsbestätigungstransaktion beispielsweise Daten über die Ausführung z. B. wie gut bzw. zu welchem Grad die Steuerbefehle abgearbeitet werden (z. B. wie schnell die Steuerbefehle abgearbeitet sind, wann diese sicher abgearbeitet sind, wie genau oder präzise die Steuerbefehle ausgeführt werden - beispielsweise beim Ausführen von Fertigungssteuerbefehlen, um z. B. eine Bearbeitung eines Werksstückes zu dokumentieren).

Alternativ oder zusätzlich umfasst die Ausführbarkeitsbestätigungstransaktion beispielsweise gerätespezifische Daten (z. B. Typ des Gerätes; aktueller Gerätezustand wie z. B. Betriebsbereit, Wartung notwendig, Fehlerzustand des entsprechenden Gerätes; Seriennummer des Gerätes; Standort des Gerätes; eine Prüfsumme/Hash der ausgeführten Steuerbefehle, die beispielsweise mit Hilfe der genannten Erfindung berechnet wurde; verwendete Werkzeuge; verwendete Materialien oder eine Kombination der genannten Daten) des entsprechenden Gerätes (z. B. des Ziels/Empfängers), die für die Ausführung der Steuerbefehle relevant sind, wobei z. B. die gerätespezifische Daten von dem entsprechenden Gerät zum Zeitpunkt der Bestätigung der Ausführbarkeit durch das Gerät ermittelt wurden. Dabei erfolgt z. B. die Bestätigung der Ausführbarkeit und die Ermittlung der gerätespezifischen Daten (in etwa) zum gleichen Zeitpunkt - beispielsweise innerhalt eines Zeitfensters von wenigen Sekunden oder Minuten. Beispielsweise können die Daten der Ausführbarkeitsbestätigungstransaktion auch zwischen dem Sender und dem Empfänger ausgetauscht worden sein, bevor die Ausführbarkeitsbestätigungstransaktion z. B. in dem verteilten Datenbanksystem gespeichert wird. Die Ausführbarkeitsbestätigungstransaktion kann beispielsweise noch kryptographisch geschützt sein (z. B. kann diese verschlüsselt sein oder durch eine Transaktionsprüfsumme geschützt sein). Auch kann beispielsweise die zuletzt über den Kommunikationskanal ausgetauschte Nachricht in der Übertragungsbestätigungstransaktion gespeichert werden (z. B. falls der Kommunikationskanal unterbrochen wird) und die Übertragungsbestätigungstransaktion z. B. dann im verteilten Datenbanksystem gespeichert werden. Diese zuletzt ausgetauschte Nachricht kann beispielsweise verwendet werden, um bei einem erneuten Aufbau des Kommunikationskanals den Datenaustausch bzw. die Datenübertragung fortzusetzen. Die Übertragungsbestätigungstransaktion kann beispielsweise auch kryptographisch geschützt sein. Die Übertragungsbestätigungstransaktion kann beispielsweise die Steuerbefehle und/oder die Steuertransaktion und/oder die letzte ausgetauschte Nachricht zwischen dem Sender und dem Empfänger umfassen. Eine Fortsetzung des Datenaustausches bzw. der Datenübertragung kann beispielsweise auch für andere Datenübertragungen genutzt werden und ist nicht speziell auf die Datenübertragung bzw. den Datenaustausch von einer einzigen Nachricht beschränkt.

Der separate und/oder direkte Kommunikationskanal ist dahingehend vorteilhaft um eine Übertragungsgeschwindigkeit und/oder Übertragungslatenzzeit zu verbessern. Es ist beispielsweise auch ein Hybridverfahren möglich, indem beispielsweise ein entsprechender Kommunikationskanal für zeitkritische Steuerbefehle (z. B. mit hoher oder kritischer Priorität) genutzt wird. Beispielsweise kann anhand der Ausführungsanforderungen (z. B. es sind zeitkritische Steuerbefehle Priorität Steuerbefehle für eine Echtzeitanwendung) bestimmt werden, ob es sich um entsprechende Steuerbefehle handelt, die über einen entsprechenden separaten Kommunikationskanal und/oder direkten Kommunikationskanal übertragen werden sollen. Alternativ oder zusätzlich kann das Bestimmungsmodul beispielsweise beim Bestimmen der Nachrichtensteuerungsdatensatz entsprechende Anweisungen für eine Datenübertragung der Nachricht bestimmen.

Unter einem "Objekt" können im Zusammenhang mit der Erfindung beispielsweise ein physikalisches Objekt, physische Güter, ein Werkstück (z. B. ein Motorenteil oder ein Triebwerksteil oder elektronisches Bauteil oder eine Platine mit elektronischen Bauteilen), ein Zwischenprodukt bei der Fertigung, Rohstoffe (z. B. Diamanten, Erdöl), Nahrungsmittel (z. B. Milch oder Bananen) oder Geräte (z. B. elektrische Geräte, elektromechanische Geräte, IoT-Geräte, elektronische Geräte oder mechatronische Geräte) verstanden werden.

Unter "digitalen Zwilling" (engl. Digital Twin) kann im Zusammenhang mit der Erfindung beispielsweise ein digitales Abbild, insbesondere in Form eines Datenmodells oder einer Datenstruktur, eines realen Produkts, (technischen) Gegenstandes oder eines (physikalischen) Objektes verstanden werden. Dies sind z. B. (elektrische /elektromechanische /elektronische) Geräte, Windturbine, oder Großanlagen wie Offshore-Plattformen. Insbesondere ist der Begriff digitaler Zwilling auch in den folgenden Patentanmeldungen erläutert: WO2016/141998 oder PCT/EP2016/064785. Insbesondere kann ein digitaler Zwilling anhand von Daten des Gegenstandes (z. B. das Objekt), der abgebildet wird, aktualisiert werden. Diese entsprechenden Daten können beispielsweise durch Sensoren erfasst werden und dann den digitalen Zwilling aktualisieren. Dies kann beispielsweise in Echtzeit, periodisch, manuell gesteuert oder zu vorgegebenen Zeitpunkten erfolgen. Unter einem digitalen Zwilling kann beispielsweise eine sehr detaillierte digitale Abbildung eines Gegenstandes verstanden werden, die insbesondere eine große Datenmenge umfasst und beispielsweise hunderte oder tausende Datensätze umfasst. Insbesondere kann ein digitaler Zwilling ein Steuermodul (z. B. Steuersoftware) oder Steuersystem (z. B. ein Überwachungssystem des Gegenstandes (z. B. das Objekt), das durch den digitalen Zwilling abgebildet wird) umfassen, sodass beispielsweise der digitale Zwilling Steuerfunktionen (z. B. kann der primäre digitale Zwilling Transaktionen mit aktualisierten Daten in die Blockkette einfügen oder seine Datenintegrität anhand der Blockkette selbständig prüfen) ausführen kann oder bereitstellt.

Unter "individuellen Merkmalen" (oder z. B. nur als Merkmale bezeichnet) können im Zusammenhang mit der Erfindung beispielsweise Merkmale (z. B. in Form von Daten) verstanden werden, die durch einen Sensor von oder über das Objekt erfasst werden können und beispielsweise einer physikalischen Größe entsprechen können (z. B. Wellenlänge des Lichtes). Die individuellen Merkmale sind dabei beispielsweise objektindividuelle Merkmale, d. h. z. B. dass diese Merkmale bzw. Daten einer einmaligen Kombination aus einen Folge von Einsen und Nullen (digitaler Fingerabdruck oder eine Art Unique Identifier) in Form von binärcodierten Daten entspricht, die z. B. einem entsprechenden Objekt bzw. dem Objekt fest zugeordnet werden können. Bei den individuellen Merkmalen kann es sich beispielsweise um Oberflächenmerkmale (z. B. Kratzer, Oberflächenunebenheiten) des Objektes handeln. Alternativ oder zusätzlich kann es sich bei den individuellen Merkmalen z. B. um spektroskopische Daten (die z. B. auch als spektrale Daten bezeichnet werden können) über das Objekt handeln (z. B. gemessene Spektren, hyperspektrale Bilder). Beispielsweise kann es sich bei dem Objekt um Edelsteine, Rohöl oder Lebensmittel handeln, von denen z. B. mittels eines Erfassungsgerätes in Form eines Spektroskopes ein Spektrum für das Objekt oder eine vorgegebene Position (z. B. eine vorgegebene Fläche und/oder Position) des Objektes erfasst wird. Insofern kann es sich bei den individuellen Merkmalen beispielsweise um spektroskopische individuelle Merkmale handeln. Bei den individuellen Merkmalen kann es sich beispielsweise auch um Merkmale handeln, die z. B. von dem Objekt nicht entfernbar sind, ohne das Objekt dabei zu beschädigen oder zu verändern. Entsprechende Merkmale können beispielsweise als intrinsische individuelle Merkmale des Objektes bezeichnet werden.

Bei den individuellen Merkmalen kann es sich beispielsweise auch um individuelle Merkmale eines Rauschsignals handeln, das z. B. durch das Erfassungsgerät (z. B. ein Oszilloskop) erfasst wird. Handelt es sich bei dem Objekt beispielsweise um ein elektronisches Bauteil, so kann beispielsweise über eine Schnittstelle des Objektes ein objektindividuelles Rauschsignal oder ein objektindividuelles Signal (z. B. ein Signalgeber, der ein unveränderbares spezifisches Signal erzeugt, das beispielsweise einmalig konfigurierbar ist) erfasst werden. Bei diesem Rauschsignal können beispielsweise Amplitude des Raussignals für bestimmte Widerstände und/oder Dämpfungen erfasst und/oder berücksichtigt werden. Auch kann beispielsweise ein vorgegebenes Testsignal durch das Objekt bereitgestellt werden und hierbei ggf. Signalverzerrungen für die individuellen Merkmale berücksichtigt werden. Alternativ oder zusätzlich kann beispielsweise das Erfassungsgerät ein Testsignal senden, das z. B. durch vorgegebene Schaltkreise des Objektes übertragen/gesendet wird. Beispielsweise erzeugt das Objekt bzw. die entsprechenden Schaltkreise des Objektes eine Antwort, die z. B. das Testsignal umfasst, wobei die Antwort an das Erfassungsgerät übermittelt wird. Es wird dann beispielsweise der individuelle Einfluss der Schaltkreise auf das Testsignal durch das Erfassungsgerät als die individuellen Merkmale erfasst. Dieser individuelle Einfluss kann beispielsweise eine Verzerrung des Testsignals sein. Entsprechend kann es sich bei den individuellen Merkmalen beispielsweise um individuelle elektronische Merkmale handeln. Auch kann es sich beispielsweise bei den individuellen Merkmalen um akustische Merkmale des Objektes handeln (z. B. Motorengeräusche, Betriebsgeräusche). Damit beispielsweise das Erfassungsgerät die individuellen Merkmale möglichst einfach erfassen kann, wird die Art und Weise und der Ort (kann z. B. als Konfiguration bezeichnet werden) am Objekt beispielsweise durch einen Objektdatensatz vorgegeben. Dieser Objektdatensatz kann beispielsweise durch die Netzwerkapplikation oder eine Datenbank (z. B. ein verteiltes Datenbanksystem) bereitgestellt werden oder dieser Objektdatensatz ist dem Objekt mittels eines dem Objekt beigelegten Datenspeichers für das Erfassungsmodul oder für das Erfassungsgerät abrufbar. Das Objekt kann beispielsweise auch den Datenspeicher umfassen. Der Objektdatensatz kann dabei beispielsweise Informationen umfassen, welche Art von Messung (z. B. optisch, spektral, akustisch, elektrisch, optoakustisch, multispektral optoakustisch), mit welcher Art von Sensor (z. B. Mikrofon, Ultraschallsensor, Infraschallsensor, spektrale Messsysteme, optoakustische Messsysteme, optoakustische Messsysteme), an welchem Ort, über welchen Zeitraum und mit welchen Messparametern (z. B. Dämpfung; Signalfilter wie Hochpass, Tiefpass, Bandpass, Frequenzen, Wellenlängen) durchzuführen sind, um die individuellen Merkmale zu erfassen.

Alternativ kann beispielsweise für gleichartige Objekte (z. B. Werkstücke des gleichen Typs) die entsprechenden Informationen, die für eine Erfassung der individuellen Merkmale notwendig sind, fest vorgegeben werden. Beispielsweise wird bei einem Objekt in Form eines Werkstückes die Unterseite des Objektes erfasst oder es sind beispielsweise Markierungen am Objekt angebracht, damit das Objekt die entsprechenden Positionen am Objekt findet und die individuellen Merkmale erfassen kann. Diese fest vorgegebenen Informationen können beispielsweise für entsprechend gleichartige Objekte in einer Netzwerkapplikation oder einem Datenbanksystem (z. B. dem verteilten Datenbanksystem) gespeichert sein oder in entsprechenden Geräten fest vorkonfiguriert sein.

Unter einer "objektindividuellen Charakteristik" (oder z. B. nur als Charakteristik bezeichnet) können im Zusammenhang mit der Erfindung beispielsweise verarbeitete (z. B. durch eine Datenverarbeitung) individuelle Merkmale verstanden werden, die dabei insbesondere derart verarbeitet werden, dass die individuelle Charakteristik reproduzierbar für die gleichen individuellen Merkmale erzeugbar ist. Insbesondere können hierbei Toleranzwerte berücksichtigt werden, um z. B. Messtoleranzen oder Messungenauigkeiten des Erfassungsgerätes auszugleichen. Bei der objektindividuellen Charakteristik handelt es sich beispielsweise um einen digitalen Fingerabdruck für das Objekt. Der digitale Fingerabdruck wird beispielsweise mittels eines Algorithmus für digitale Fingerabdrücke (z. B. Rabin's fingerprinting algorithm) berechnet. Handelt es sich bei den individuellen Merkmalen beispielsweise um ein Signal oder Rauschsignal, so können das Signal/Rauschverhältnis, Phase des Signals, Frequenzen, Wellenlängeninformationen, Frequenzamplituden verwendet werden. Auch können beispielsweise die individuellen Merkmale z. B. hinsichtlich Wellenlängen und Amplituden bei Spektren ausgewertet werden. Bei hyperspektralen Bildern kann beispielsweise für die jeweiligen Wellenlängen der Bilder die Intensität der Wellenlänge an einer oder mehreren Bildpositionen bzw. Positionen am Objekt ausgewertet werden (bzw. in den entsprechenden erfassten Bildern).

Bevor beispielsweise die entsprechende Charakteristik für die entsprechenden individuellen Merkmale berechnet wird, können z. B. die individuellen Merkmale vorverarbeitet werden, um die Messungenauigkeiten zu kompensieren. Beispielsweise liegen Messwerte der individuellen Merkmale in einem möglichen Wertebereich (z. B. 1 bis 100). Dieser Wertebereich wird beispielsweise in vorgegebene Intervalle eingeteilt, z. B. 5 Werteintervalle (1 - 20, 21 - 40, 41 - 60, 61 - 80, 81 - 100). Den einzelnen Werteintervallen werden dann intervallspezifische Werte zugewiesen (z. B. 1 - 20: A, 21 - 40: B, 41 - 60: C, 61 - 80: D, 81 - 100: E). Wird beispielweise ein Messwert der individuellen Merkmale ausgewertet oder vorverarbeitet, so wird z. B. überprüft in welchem Werteintervall der konkrete Messwert liegt und der intervallspezifische Werte für die Berechnung des digitalen Fingerabdruckes verwendet. Für die Werte 1 und 100 wäre beispielsweise "AE" das Ergebnis. Auch können beispielsweise andere Verfahren verwendet werden. Dies sind beispielsweise Mittelwertverfahren oder gleitende Mittelwertverfahren. Die entsprechenden ggf. vorverarbeiteten individuellen Merkmale werden dann z. B. als Eingabeparameter für einen Algorithmus zum Berechnen des digitalen Fingerabdruckes verwendet. Alternativ oder zusätzlich kann beispielsweise eine der erwähnten Varianten der Vorverarbeitung/Verarbeitung auf die Daten (individuelle Merkmale und/oder objektindividuelle Merkmale) angewendet werden, die zur Ermittlung oder Bereitstellung oder Berechnung des ersten kryptographischen Schlüssels dienen. Alternativ kann beispielsweise die erläuterte Vorverarbeitung/Verarbeitung für die entsprechenden Daten (z. B. die individuellen Merkmale und/oder objektindividuellen Merkmale und/oder objektindividuellen Charakteristik) verwendet werden, bevor diese auch für andere Zwecke verwendet werden. Beispielsweise kann anhand dieser derart verarbeiteten Daten die kryptographische Prüfsumme berechnet werden, indem diese Daten z. B. als Geheimnis bei der Berechnung der kryptographischen Prüfsumme verwendet werden (z. B. ist dies für das Gerät einsetzbar).

Unter "Nachrichten" können im Zusammenhang mit der Erfindung beispielsweise Nachrichten eines Kommunikationsprotokolls und/oder Transaktionen eines Datenbanksystems (z. B. eines verteilten Datenbanksystems) oder einer Netzwerkapplikation verstanden werden. Eine Nachricht kann beispielsweise der Datenstruktur entsprechen oder eine Nachricht kann die Datenstruktur umfassen. Die entsprechende Nachricht kann beispielsweise auch die entsprechende kryptographische Prüfsumme umfassen.

Unter einer "Datenstruktur" kann im Zusammenhang mit der Erfindung beispielsweise eine Nachricht oder eine Transaktion verstanden werden. Alternativ umfasst beispielsweise eine Nachricht oder eine Transaktion eine entsprechende Datenstruktur. Beispielsweise umfassen ggf. die Datenstruktur, die Nachricht oder die Transaktion eine entsprechende kryptographische Prüfsumme für die Datenstruktur.

Unter einem "kryptographischer Schlüssel" kann im Zusammenhang mit der Erfindung beispielsweise ein symmetrischer kryptographischer Schlüssel oder ein privater Schlüssel eines asymmetrischen kryptographischen Schlüsselpaar oder ein öffentlicher Schlüssel eines asymmetrisches kryptographisches Schlüsselpaares verstanden werden.

Beispielsweise kann eine von der Erfindung genutzte Datenstruktur noch weitere Daten umfassen, wie beispielsweise Steuerbefehle, um z. B. einen Weitertransport oder eine Weiterverarbeitung des Objektes zu steuern, wenn z. B. mit der Erfindung festgestellt wurde, dass das Objekt authentisch ist bzw. dem Objekt entspricht, für das z. B. bereits eine entsprechende Datenstruktur (z. B. mit einer Prüfsumme) z. B. in dem digitalen Zwilling oder der Netzwerkapplikation gespeichert wurde.

Mit der Erfindung ist es insbesondere möglich, eine dezentrale Infrastruktur (z. B. blockkettenbasiert) zu realisieren, die reale bzw. physische Güter (z. B. Objekte) durch eine digitale Infrastruktur verwaltet und deren Verarbeitung (z. B. Herstellung, Transport und Bestätigung deren Authentizität) gesteuert wird. Häufig werden beispielsweise für die physischen Objekte digitale Zwillinge erzeugt, um z. B. die Weiterverarbeitung eines Objektes (z. B. eines Werkstücks) zu steuern und/oder deren Transport und Arbeitsschritte zu dokumentieren. Die Erfindung erlaubt es insbesondere für ein (physisches) Objekt den zugehörigen digitalen Zwilling zu identifizieren. Ist z. B. für das Objekt der zugehörige digitale Zwilling identifiziert, so können beispielsweise in einer Datenstruktur Daten über den digitalen Zwilling mit dem Objekt ausgetauscht werden oder das Objekt tauscht Daten mit dem digitalen Zwilling mittels einer entsprechenden Datenstruktur über eine Kommunikationsverbindung aus.

Entsprechend können z. B. Daten über den digitalen Zwilling in der Datenstruktur gespeichert werden. Wird beispielsweise ein solches Objekt ausgeliefert, besteht ein Bedarf oder eine Notwendigkeit überprüfen zu können, ob das Objekt tatsächlich das Objekt ist, das dem digitalen Zwilling zugeordnet ist. Hierzu muss der entsprechende digitale Zwilling identifiziert werden.

Um diese Aufgabe zu lösen, werden beispielsweise durch das Erfassungsgerät die individuellen Merkmale des Objektes erfasst. Bei den individuellen Merkmalen kann es sich beispielsweise um Oberflächenstrukturen des Objektes handeln, wenn das Objekt beispielsweise ein Werkstück ist, das mittels Zerspanung gefertigt wurde. Hierbei können beispielsweise an vorgegebenen Positionen des Objektes durch das Erfassungsgerät (z. B. ein Oberflächenerfassungsgerät wie beispielsweise ein 3D-Oberflächenscanner oder eine Oberflächenkamera) die individuellen Merkmale erfasst werden, wobei es sich beispielsweise in einem solchen Fall bei den individuellen Merkmalen um individuelle Oberflächenmerkmale des Objektes handelt. Es ist beispielsweise auch denkbar, dass ein digitaler Fingerabdruck in Form der individuellen Merkmale in das Objekt eingearbeitet wurde. Dieser Fingerabdruck bzw. die digitalen Merkmale sind beispielsweise mit dem bloßen Auge und/oder ohne Kenntnisse über die Art und Position nicht feststellbar oder nur mit erheblichem technischem Aufwand feststellbar. Entsprechend können beispielsweise die Informationen, um die individuellen Merkmale zu erfassen, in einem geschützten Speicher des Gerätes liegen, sodass kein Zugriff durch Unbefugte auf diese Informationen stattfinden kann. Bei dem eingearbeiteten Fingerabdruck kann es sich beispielsweise um Oberflächenunebenheiten handeln, die während der Fertigung des Objektes erzeugt werden. Alternativ oder zusätzlich kann der Fingerabdruck durch das Aufbringen von Farben oder Partikeln realisiert sein, wobei beispielsweise die Farben oder Partikel derart aufgebracht werden, dass ein individuelles Spektrum für das Objekt erzeugt wird. Hierzu können beispielsweise unterschiedliche Farben/Partikel über die Oberfläche des Objektes verteilt werden, sodass beispielsweise ein geometrisches Spektrum erzeugt wird, damit z. B. an bestimmten Positionen des Objektes ein vorgegebenes Spektrum gemessen werden kann. Das Spektrum bzw. die Farben/Partikel sind beispielsweise derart gewählt, dass diese nicht im durch das menschliche Auge sichtbaren Spektrum liegen. Dies kann beispielsweise ein Spektrum sein, das jenseits der 800 nm (z. B. Wellenlängen > 800 nm wie ein Wellenlängenbereich zwischen 800 nm und 1000 nm) liegt.

Bei den individuellen Merkmalen kann es sich beispielsweise auch um andere Merkmale als Oberflächenmerkmale handeln. Beispielsweise kann es sich bei den individuellen Merkmalen um spektroskopische Daten über das Objekt handeln. Beispielsweise kann es sich bei dem Objekt um Edelsteine, Rohöl oder Lebensmittel handeln, von denen z. B. mittels eines Erfassungsgerätes in Form eines Spektroskopes ein Spektrum für das Objekt oder eine vorgegebene Position (z. B. eine vorgegebene Fläche und/oder Position) des Objektes erfasst wird. Insofern kann es sich bei den individuellen Merkmalen beispielsweise in spektroskopische individuelle Merkmale handeln. Bei den individuellen Merkmalen kann es sich beispielsweise auch um individuelle Merkmale eines Rauschsignals handeln, das z. B. durch das Erfassungsgerät (z. B. ein Oszilloskop) erfasst wird. Handelt es sich bei dem Objekt beispielsweise um ein elektronisches Bauteil, so kann beispielsweise über eine Schnittstelle des Objektes ein objektindividuelles Rauschsignal oder ein objektindividuelles Signal (z. B. ein Signalgeber, der ein unveränderbares spezifisches Signal erzeugt, das beispielsweise einmalig konfigurierbar ist) erfasst werden. Bei diesem Rauschsignal können beispielsweise Amplitude des Raussignals für bestimmte Widerstände und/oder Dämpfungen erfasst und/oder berücksichtigt werden. Auch kann beispielsweise ein vorgegebenes Testsignal durch das Objekt bereitgestellt werden und hierbei ggf. Signalverzerrungen für die individuellen Merkmale berücksichtigt werden. Alternativ oder zusätzlich kann beispielsweise das Erfassungsgerät ein Testsignal senden, das z. B. durch vorgegebene Schaltkreise des Objektes übertragen/gesendet wird. Beispielsweise erzeugt das Objekt bzw. die entsprechenden Schaltkreise des Objektes eine Antwort, die z. B. das Testsignal umfasst, wobei die Antwort an das Erfassungsgerät übermittelt wird. Es wird dann beispielsweise der individuelle Einfluss der Schaltkreise auf das Testsignal durch das Erfassungsgerät als die individuellen Merkmale erfasst. Dieser individuelle Einfluss kann beispielsweise eine Verzerrung des Testsignals sein. Entsprechend kann es sich bei den individuellen Merkmalen beispielsweise um individuelle elektronische Merkmale handeln.

Abhängig von dem Objekt und/oder einer entsprechenden Konfiguration/Festlegung kann es sich somit bei den individuellen Merkmalen beispielsweise um individuelle Oberflächenmerkmale und/oder individuelle spektroskopische Merkmale und/oder individuelle elektronische Merkmale handeln. Bei den individuellen Merkmalen kann es sich beispielsweise auch um akustische Merkmale, optoakustische Merkmale handeln oder multisprektrale optoakustische Merkmale handeln. Die entsprechenden individuellen Merkmale lassen sich beispielsweise reproduzierbar für das Objekt erfassen.

Bei den individuellen Merkmalen (können z. B. auch als objektindividuelle Merkmale bezeichnet werden) kann es sich beispielsweise auch um eine Kombination der genannten Beispiele für individuellen Merkmale handeln.

Unter Verwendung der individuellen Merkmale kann dann beispielsweise die objektindividuelle Charakteristik berechnet werden. Hierbei können beispielsweise Toleranzwerte für die individuellen Merkmale berücksichtigt werden, um beispielsweise eine reproduzierbare objektindividuelle Charakteristik für das Objekt zu erzeugen. Die objektindividuelle Charakteristik ist dahingehend vorteilhaft, um beispielsweise Messungenauigkeiten beim Erfassen der individuellen Merkmale zu kompensieren.

Beispielsweise kann die erwähnte Datenstruktur eine Nachricht sein oder eine Nachricht kann die Datenstruktur umfassen, wobei die Nachricht beispielsweise durch ein verteiltes Datenbanksystem oder eine Netzwerkapplikation oder den digitalen Zwilling gespeichert werden soll, wobei das verteilte Datenbanksystem oder die Netzwerkapplikation beispielsweise eine Blockkette ist und die Datenstruktur eine Transaktion des verteilten Datenbanksystems (oder der Netzwerkapplikation) und die kryptographische Prüfsumme beispielsweise eine Transaktionsprüfsumme ist. Beispielsweise wird der Datenstruktur die kryptographische Prüfsumme angehängt, sodass die Integrität und/oder Herkunft und/oder Authentizität der Datenstruktur und deren Zugehörigkeit zum Objekt überprüft werden kann. Die Netzwerkapplikation oder eine Datenbank kann dabei beispielsweise eine Vielzahl von digitalen Zwillingen umfassen, aus denen z. B. der entsprechende digitale Zwilling, der dem Objekt zugeordnet ist, anhand der individuellen Merkmale durch einen Vergleich mit dem Referenzwert identifiziert wird und vorzugsweise bei einer ausreichenden Übereinstimmung der Referenzwerte und der individuellen Merkmale wird der digitale Zwilling bereitgestellt. Bereitstellen bedeutet in diesem Zusammenhang beispielsweise, dass ein Zugriff auf den ausgewählten digitalen Zwilling erlaubt wird, indem z. B. der digitale Zwilling anhand des später erläuterten ersten kryptographischen Schlüssels entschlüsselt wird.

Bei einer ersten Ausführungsform des Gerätes umfasst das Gerät beispielsweise ein Kryptographiemodul, wobei das Kryptographiemodul beispielsweise einen ersten kryptographischen Schlüssel anhand von einer objektindividuellen Charakteristik und/oder anhand der individuellen Merkmale berechnet.

Bei weiteren Ausführungsformen des Gerätes werden die individuellen Merkmale mit dem entsprechenden Referenzwert verglichen, wobei bei einer ausreichend genauen Übereinstimmung des Referenzwertes mit den individuellen Merkmalen der erste kryptographische Schlüssel durch das Kryptographiemodul freigegeben wird.

Bei weiteren Ausführungsformen des Gerätes wird zwischen dem Objekt und dem ausgewählten digitalen Zwilling eine Kommunikationsverbindung hergestellt.

Bei weiteren Ausführungsformen des Gerätes ist die Kommunikationsverbindung und/oder der digitale Zwilling mittels eines kryptographischen Schutzes geschützt.

Bei weiteren Ausführungsformen des Gerätes kann der kryptographische Schutz mit dem ersten kryptographischen Schlüssel erzeugt und/oder überprüft und/oder entfernt werden.

Bei weiteren Ausführungsformen des Gerätes ist der Referenzwert ein Referenzhashwert oder ein eindeutiger (Referenz-)Identifizierer, wobei beispielsweise der Referenzhashwert oder der eindeutige (Referenz-)Identifizierer für einen oder den gespeicherten Referenzwert gebildet wurde. Alternativ oder zusätzlich sind die individuellen Merkmale ein Objekthashwert oder ein eindeutiger (Objekt-)Identifizierer, wobei beispielsweise der Objekthashwert oder der eindeutige (Objekt-)Identifizierer beim Erfassen der individuellen Merkmale gebildet wurden bzw. werden. Zur Berechnung der entsprechenden Hashwerte oder der entsprechenden eindeutigen Identifizierer (unique Identifier) können z. B. entsprechende kryptographische Funktionen verwendet werden.

Bei weiteren Ausführungsformen des Gerätes wird der Referenzwert bei einem Erzeugen des digitalen Zwillings festgelegt, wobei der Referenzwert insbesondere beim Erzeugen des digitalen Zwillings diesem zugeordnet wird, sodass der digitale Zwilling beispielsweise bei einem Übereinstimmen des Referenzwertes mit den individuellen Merkmalen ausgewählt werden kann.

Bei weiteren Ausführungsformen des Gerätes wird der ausgewählte digitale Zwilling anhand des Objektes synchronisiert, und/oder das Objekt wird anhand des ausgewählten digitalen Zwillings synchronisiert.

Bei weiteren Ausführungsformen des Gerätes führt der ausgewählte digitale Zwilling anhand des Objektes Steuerfunktionen (z. B. des digitalen Zwillings oder des Objektes) aus, und/oder das Objekt führt anhand des ausgewählten digitalen Zwillings Steuerfunktionen (z. B. des digitalen Zwillings oder des Objektes) aus.

Bei weiteren Ausführungsformen des Gerätes sind der ausgewählte digitale Zwilling und weitere digitale Zwillinge in einer Netzwerkapplikation oder einer verteilten Datenbank gespeichert, wobei
- das verteilte Datenbanksystem beispielsweise eine Blockkette ist,
- das Gerät beispielsweise als Knoten oder Orakel des verteilten Datenbanksystems ausgebildet ist,
- die kryptographische Prüfsumme beispielsweise eine digitale Signatur ist.

Bei weiteren Ausführungsformen des Gerätes umfasst das Gerät beispielsweise ein Berechnungsmodul (120), wobei
- das Berechnungsmodul (120) beispielsweise zum Berechnen einer objektindividuellen Charakteristik anhand der individuellen Merkmale eingerichtet ist,
- die Charakteristik beispielsweise unter Berücksichtigung vorgegebener Toleranzwerte der individuellen Merkmale berechnet wird,
- beispielsweise die Charakteristik und/oder die individuellen Merkmale mit dem entsprechenden Referenzwert verglichen werden,
- beispielsweise bei einer ausreichend genauen Übereinstimmung des Referenzwertes mit der Charakteristik und/oder der individuellen Merkmale der erste kryptographische Schlüssel durch das Kryptographiemodul freigegeben wird.

Bei weiteren Ausführungsformen des Gerätes umfasst das Gerät beispielsweise ein Monitoringmodul umfasst, wobei beispielsweise das Monitoringmodul dazu eingerichtet ist das Gerät zu überwachen und insbesondere Informationen der Überwachung in eine Datei oder in einer Datenstruktur zu speichern. Damit kann der Betrieb des Gerätes überwacht werden und z. B. festgestellt werden, wann an einem Gerät Veränderungen vogenommen wurden (z. B. ein Software- oder Firmwareupdate wurde eingespielt) oder wann sich ein Gerätezustand des Gerätes z. B. geändert hat.

Bei weiteren Ausführungsformen des Gerätes umfasst der digitale Zwilling und/oder das Objekt und/oder das Gerät einen Objektdatensatz, wobei
- der Objektdatensatz angibt, an welchen geometrischen Stellen und/oder Schnittstellen das Erfassungsgerät die individuellen Merkmale erfassen kann,
- der Objektdatensatz beispielsweise die individuellen Merkmale und/oder die objektindividuelle Charakteristik in verschlüsselter Form umfasst,
- beispielsweise die verschlüsselten die individuellen Merkmale und/oder die objektindividuelle Charakteristik mittels des ersten kryptographischen Schlüssels werden können.
- der Objektdatensatz beispielsweise weitere Objektdaten umfasst, wie beispielsweise Messwerte des Objektes, Messwerte über das Objekt, Herstellungsangaben des Objektes, Aufenthaltsorte des Objektes,
- die weiteren Objektdaten beispielsweise von Sensoren des Gerätes für das Objekt erfasst werden,
- die Sensoren beispielsweise ein GPS-Modul sind und/oder Temperatursensoren und/oder optische Sensoren sind, die beispielsweise entsprechende Eigenschaften von dem Objekt erfassen.

Das Gerät ist dahingehend vorteilhaft, um beispielsweise bestimmte ausgewählte Bereiche des Objektes oder auch die Schnittstellen festzulegen, über die die individuellen Merkmale durch das Erfassungsgerät erfasst werden können. Bei den Schnittstellen kann es sich beispielsweise um Schnittstellen des Objektes handeln, wenn es sich beispielsweise bei dem Objekt um ein elektronisches Bauteil handelt. Der Objektdatensatz kann hierzu beispielsweise in einer entsprechenden Datenstruktur gespeichert sein und zwischen dem Objekt und/oder dem Gerät und/oder dem digitalen Zwilling und/oder der Netzwerkapplikation ausgetauscht werden.

Bei einer weiteren Ausführungsform des Gerätes wird die objektindividuelle Charakteristik unter Berücksichtigung vorgegebener Toleranzwerte der individuellen Merkmale berechnet.

Das Gerät ist dahingehend vorteilhaft, um beispielsweise Messungenauigkeiten bei einer Berechnung der Charakteristik zu kompensieren, um für das korrekte Objekt ggf. reproduzierbar die objektindividuelle Charakteristik zu berechnen. Beispielsweise können die Toleranzwerte derart gewählt werden, dass bei spektroskopischen individuellen Merkmalen (auch spektrale individuelle Merkmale genannt) eines Objektes z. B. in Form von Lebensmitteln, kein erster kryptographischer Schlüssel bereitgesellt wird (oder kein gültiger erster kryptographischer Schlüssel bereitgestellt werden kann), wenn das Objekt bzw. die Lebensmittel nicht mehr frisch genug sind. Handelt es sich beispielsweise bei dem Objekt um Bananen, so kann der Toleranzwert für das Spektrum der Oberflächen der Bananen derart gewählt werden, dass bei einem großflächigen Braunwerden der Bananen (z. B. ist im Spektrum ein deutlich verringerte Grünanteil und/oder Gelbanteil vorhanden, so dass z. B. ein entsprechender Referenzwert unterschritten wird), für diese Bananen kein erster kryptographischer Schlüssel bereitgestellt wird (oder kein gültiger erster kryptographischer Schlüssel bereitgestellt werden kann) erzeugt wird. Entsprechend können die Bananen bzw. eine Bananenlieferung mit diesen Bananen an einem Transportpunkt oder bei einem Zwischenhändler nicht mehr als "Frisch" in einer Lieferkette mittels einer Nachricht mit der Datenstruktur oder der Datenstruktur in dem verteilten Datenbanksystem (oder in der Netzwerkapplikation) bestätigt/gespeichert werden. Auf die gleiche Weise können beispielsweise andere Objekte in der Form von verderblichen Waren mittels Nachrichten/Datenstrukturen in einem verteilten Datenbanksystem (oder in einer Netzwerkapplikation) überwacht werden. Die entsprechenden Toleranzwerte werden dann entsprechend gewählt, dass ggf. kein erster kryptographischer Schlüssel bereitgestellt wird, wenn die verderblichen Waren z. B. zu stark degeneriert sind (z. B. die Haltbarkeit von Lebensmitteln abgelaufen ist oder die Lebensmittel verdorben sind). Alternativ kann beispielsweise beim Überschreiten der Toleranzwerte ein alternativer kryptographischer Schlüssel bereitgestellt werden, anhand dessen nachvollzogen werden kann, an welcher Stelle bei der Dokumentation des Transportes des Objektes die Toleranzwerte überschritten wurden. Mit anderen Worten kann beispielsweise mittels der Toleranzwerte ein Schwellenwert festgelegt werden, bei dessen Überschreitung insbesondere kein entsprechender gültiger erster kryptographischer Schlüssel bereitgestellt wird bzw. keine gültige kryptographische Prüfsumme erstellt wird. Insbesondere kann in einem solchen Fall z. B. ein Toleranzwert einem Schwellenwert entsprechen.

Bei weiteren Ausführungsformen des Gerätes wird beispielsweise anhand der objektindividuellen Charakteristik und/oder der individuellen Merkmale und/oder einer Zeichenfolge der erste kryptographische Schlüssel berechnet. Alternativ kann beispielsweise anstelle des ersten kryptographischen Schlüssels beispielsweise die kryptographische Prüfsumme berechnet werden.

Bei einer weiteren Ausführungsform des Gerätes wird beim Vergleichen der individuellen Merkmale mit dem entsprechenden Referenzwert ein vorgegebener Toleranzwert berücksichtigt.

Das Gerät ist dahingehend vorteilhaft, um beispielsweise Messungenauigkeiten beim Erfassen der individuellen Merkmale zu berücksichtigen, um für das korrekte Objekt ggf. reproduzierbar die individuellen Merkmale zu ermitteln. Beispielsweise können die Toleranzwerte derart gewählt werden, dass bei spektroskopischen individuellen Merkmalen (auch spektrale individuelle Merkmale genannt) eines Objektes z. B. in Form von Lebensmitteln, kein erster kryptographischer Schlüssel bereitgestellt wird (oder kein gültiger erster kryptographischer Schlüssel bereitgestellt werden kann), wenn das Objekt bzw. die Lebensmittel nicht mehr frisch genug sind. Handelt es sich beispielsweise bei dem Objekt um Bananen, so kann der Toleranzwert für das Spektrum der Oberflächen der Bananen derart gewählt werden, dass bei einem großflächigen Braunwerden der Bananen (z. B. ist im Spektrum ein deutlich verringerte Grünanteil und/oder Gelbanteil vorhanden, sodass z. B. ein entsprechender Referenzwert unterschritten wird), für diese Bananen kein erster kryptographischer Schlüssel bereitgesellt wird (oder kein gültiger erster kryptographischer Schlüssel bereitgestellt werden kann) erzeugt wird. Entsprechend können die Bananen bzw. eine Bananenlieferung mit diesen Bananen an einem Transportpunkt oder bei einem Zwischenhändler nicht mehr als "Frisch" in einer Lieferkette mittels einer Nachricht mit der Datenstruktur oder der Datenstruktur in dem verteilten Datenbanksystem (oder in der Netzwerkapplikation) bestätigt/gespeichert werden. Auf die gleiche Weise können beispielsweise andere Objekte in der Form von verderblichen Waren mittels Nachrichten/Datenstrukturen in einem verteilten Datenbanksystem (oder in einer Netzwerkapplikation) überwacht werden, indem z. B. entsprechende Informationen in dem entsprechenden digitalen Zwilling gespeichert werden. Die entsprechenden Toleranzwerte werden dann entsprechend gewählt, dass ggf. kein erster kryptographischer Schlüssel bereitgestellt wird oder eine Zuordnung eines digitalen Zwillings zum Dokumentieren von überschrittenen Toleranzwerten erfolgt, wenn die verderblichen Waren z. B. zu stark degeneriert sind (z. B. die Haltbarkeit von Lebensmitteln abgelaufen ist oder die Lebensmittel verdorben sind). Alternativ kann beispielsweise beim Überschreiten der Toleranzwerte ein alternativer kryptographischer Schlüssel bereitgestellt werden, anhand dessen nachvollzogen werden kann, an welcher Stelle bei der Dokumentation des Transportes des Objektes die Toleranzwerte überschritten wurden. Mit anderen Worten kann beispielsweise mittels der Toleranzwerte ein Schwellenwert festgelegt werden, bei dessen Überschreitung insbesondere kein entsprechender gültiger erster kryptographischer Schlüssel bereitgestellt wird bzw. keine gültige kryptographische Prüfsumme erstellt wird oder bei dem kein digitaler Zwilling zugeordnet wird oder ein digitaler Zwilling für überschrittene Toleranzwerte zugeordnet wird. Insbesondere kann in einem solchen Fall z. B. ein Toleranzwert einem Schwellenwert entsprechen.

Bei weiteren Ausführungsformen des Gerätes umfasst der Objektdatensatz Daten, die angeben, an welchen geometrischen Stellen und/oder Schnittstellen das Erfassungsgerät die individuellen Merkmale erfassen kann.

Das Gerät ist dahingehend vorteilhaft, um beispielsweise bestimmte ausgewählte Bereiche des Objektes oder auch die Schnittstellen festzulegen, über die die individuellen Merkmale durch das Erfassungsgerät erfasst werden können. Bei den Schnittstellen kann es sich beispielsweise um Schnittstellen des Objektes handeln, wenn es sich beispielsweise bei dem Objekt um ein elektronisches Bauteil handelt.

Bei weiteren Ausführungsformen des Gerätes umfasst der Objektdatensatz beispielsweise die individuellen Merkmale und/oder die objektindividuelle Charakteristik in verschlüsselter Form, wobei beispielsweise die verschlüsselten individuellen Merkmale und/oder die objektindividuelle Charakteristik mittels des ersten kryptographischen Schlüssels entschlüsselt werden können.

Das Gerät ist dahingehend vorteilhaft, um beispielsweise die Charakteristik durch einen Empfänger (z. B. im Sinne einer Warenlieferung) überprüfbar zu machen, um z. B. festzustellen, wie stark die individuellen Merkmale und/oder die objektindividuelle Charakteristik während der Verarbeitung des Objektes variiert haben. Dies ist beispielsweise relevant, wenn das Objekt über einen langen Transportweg transportiert wurde oder bei der Herstellung des Objektes mehrere Herstellungsschritte durchgeführt wurden. In diesen genannten Fällen und anderen Fällen wird für das Objekt eine Datenstruktur erstellt und beispielsweise in einem verteilten Datenbanksystem (oder in einer Netzwerkapplikation) gespeichert (wie z. B. oben bereits erläutert). Die Datenstruktur kann dabei beispielsweise zusätzlich Informationen über den Fertigungsschritt, Fertigungsbedingungen (Temperaturen bei der Fertigung), verwendete Werkzeuge und verwendete Materialien umfassen. Bei einem Transport kann die Datenstruktur beispielsweise Informationen über die Transportbedingungen (Temperatur für Kühlketten, Positionsinformationen usw.) umfassen. Diese zusätzlichen Informationen können beispielsweise als weitere objektbezogene Daten bezeichnet werden. Beispielsweise kann es sich bei dem Objekt im Falle eines Transportes um einen Transportbehälter handeln, der entsprechende Sensoren und/oder das Gerät umfasst. Bei dem Transportbehälter kann es sich beispielsweise um Transportbehälter für Milch, Edelsteine oder andere Lebensmittel/Materialien handeln. Der Transportbehälter könnte beispielsweise ein erfindungsgemäßes Gerät und ein entsprechendes Erfassungsgerät umfassen.

Bei weiteren Ausführungsformen des Gerätes umfasst der Objektdatensatz beispielsweise weitere objektbezogene Daten wie beispielsweise Messwerte des Objektes, Messwerte über das Objekt, Herstellungsangaben des Objektes, Aufenthaltsorte des Objektes, wobei die weiteren Objektdaten beispielsweise von Sensoren des Gerätes für das Objekt oder durch Sensoren des Objektes erfasst werden, wobei die Sensoren beispielsweise ein GPS-Modul sind und/oder Temperatursensoren und/oder optische Sensoren und/oder akustische Sensoren und/oder optoakustische Sensoren sind, die beispielsweise entsprechende Eigenschaften von dem Objekt erfassen.

Beispielsweise können die Sensorwerte während der Fertigung oder während des Transportes des Objektes erfasst werden und z. B. in dem verteilten Datenbanksystem (oder in der Netzwerkapplikation) gespeichert werden (z. B. mittels der Datenstruktur vorzugsweise in Verbindung mit der kryptographischen Prüfsumme).

Gemäß einem weiteren Aspekt betrifft die Erfindung ein computerimplementiertes Verfahren zum Identifizieren eines zu einem Objekt zugehörigen digitalen Zwillings mit folgenden Verfahrensschritten:
- Erfassen individueller Merkmale (M) eines Objektes (O) mittels eines Erfassungsgerätes (A);
- Auswählen eines digitalen Zwillings, wobei
   - die individuellen Merkmale mit einem entsprechenden Referenzwert verglichen werden,
   - bei einer ausreichend genauen Übereinstimmung des Referenzwertes mit den individuellen Merkmalen ein dem Referenzwert zugeordneter digitaler Zwilling ausgewählt wird,
   - beispielsweise bei einer ausreichend genauen Übereinstimmung des Referenzwertes mit den individuellen Merkmalen der digitale Zwilling bereitgestellt wird.

Bei weiteren Ausführungsformen des Verfahrens umfasst das Verfahren weitere Verfahrensschritte, um die funktionalen Merkmale oder um weitere Merkmale des Gerätes bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Gerät erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Gerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

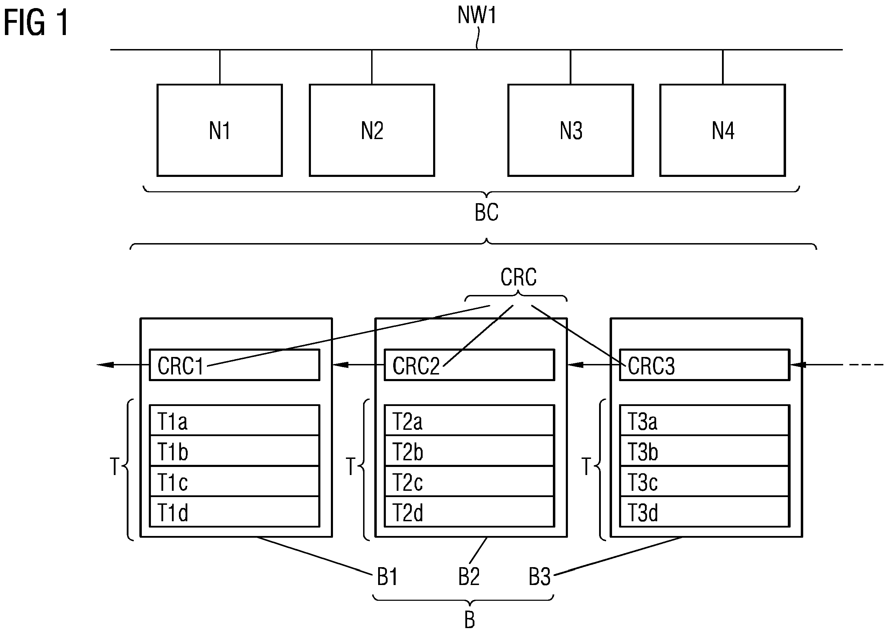

Die Fig. 1 bis Fig. 3 zeigen jeweils Ausführungsbeispiele der unterschiedlichen Aspekte der Erfindung.

Fig. 1 zeigt dabei ein System, das verwendet wird, um beispielsweise Sensordaten in einer Netzwerkapplikation (z. B. einem verteilten Datenbanksystem) zu speichern. Bei den Sensordaten handelt es sich insbesondere um Informationen über ein Objekt O. Dabei umfasst die Netzwerkwerkapplikation z. B. eine Vielzahl von digitalen Zwillingen, wobei der dem Objekt zugehörige digitale Zwilling zum Speichern einer Datenstruktur mit entsprechenden Daten (z. B. eine Datenstruktur mit den Sensordaten, Objektdaten oder anderen Daten) ausgewählt und/oder bereitgestellt wird.

In Fig. 1 sind ein erster Knoten N1, ein zweiter Knoten N2, ein dritter Knoten N3 und ein vierter Knoten N4 gezeigt, die die Knoten der Netzwerkapplikation BC (z. B. das verteilte Datenbanksystem, das z. B. als Blockkette realisiert ist) bilden, wobei einer der Knoten, z. B. der erste Knoten N1, das (erfindungsgemäße) Gerät umfasst. Die Knoten sind dabei z. B. über ein erstes Kommunikationsnetzwerk NW1 miteinander verbunden.

Desweiteren zeigt die Fig. 1 Blöcke B, beispielsweise einen ersten Block B1, einen zweiten Block B2 und einen dritten Block B3, einer Netzwerkapplikation BC, wobei hier insbesondere ein Ausschnitt der Netzwerkapplikation BC exemplarisch gezeigt ist. Im hier konkreten Fall kann die Netzwerkapplikation BC z. B. als Blockkette oder DLT realisiert sein.

Die Blöcke B umfassen jeweils mehrere Transaktionen T. Die Transaktionen T können dabei Steuertransaktionen und/oder Bestätigungstransaktionen und/oder eine Datenstruktur und/oder einen Objektdatensatz und/oder erfasst individuelle Merkmale umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die die Netzwerkapplikation oder die Blockkette BC selbst wird durch eine Blockketten-Infrastruktur mit mehreren Bloccketten-Knoten (Knoten N1, N2, N3, N4 und weiteren Blöcken) realisiert. Bei den Knoten kann es sich beispielsweise um Blockkettenorakel oder vertrauenswürdige Knoten handeln.

Die Knoten sind über das Netzwerk NW1 (z. B. ein Kommunikationsnetzwerk wie das Internet oder ein Ethernet-Netzwerk) miteinander kommunikativ verbunden. Mittels der Netzwerkapplikationsinfrastruktur bzw. der Blockketten-Infrastruktur werden beispielsweise zumindest ein Teil der Datenblöcke B oder alle Datenblöcke B der Netzwerkapplikation BC für einen Teil oder alle Knoten der Netzwerkapplikation repliziert.

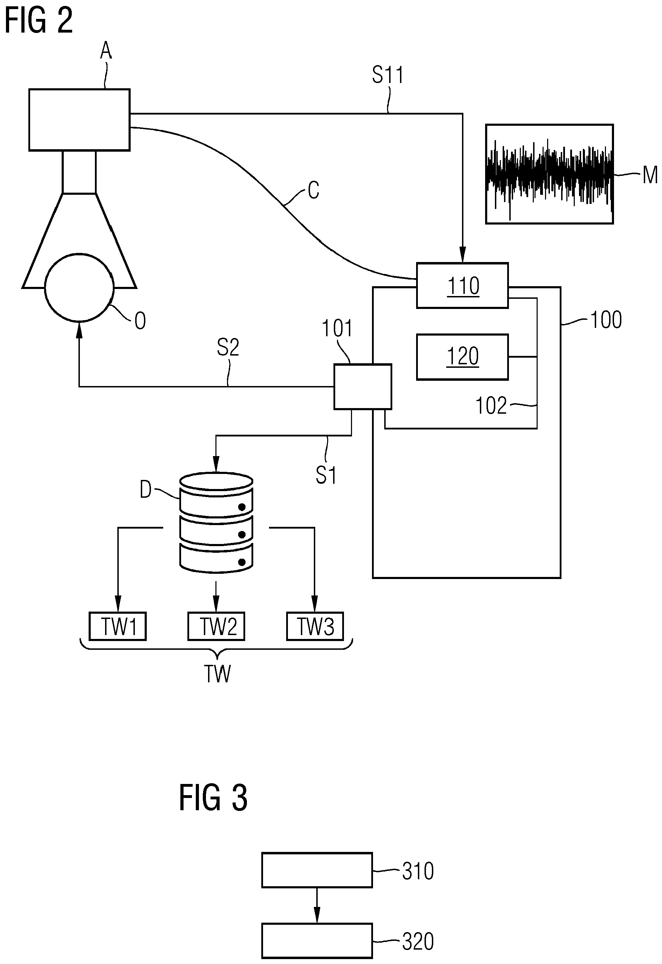

Das (erfindungsgemäße) Gerät (Fig. 2) kann beispielsweise als Komponente der Netzwerkapplikation oder in Varianten einer Kommunikationsinfrastruktur (z. B. ein Peer-2-Peer System, einer verteilten Kommunikationsinfrastruktur) sein. Das Gerät kann beispielsweise mittels der Netzwerkapplikation mit anderen Geräten oder Datenbanken oder Systemen oder verteilten Datenbanksystemen kommunizieren oder in Varianten mittels einer Kommunikationsinfrastruktur (z. B. ein Peer-2-Peer System, einer verteilten Kommunikationsinfrastruktur) miteinander kommunizieren.

Die Knoten der Netzwerkapplikation (z. B. Blockketten-Knoten) und/oder das verteilte Datenbanksystem und/oder das (erfindungsgemäße) Gerät können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Fig. 2 zeigt beispielshaft an einem weiteren Ausführungsbeispiel die Funktionsweise des Gerätes. Das Gerät kann beispielsweise auch als Vorrichtung bezeichnet werden.

Die Fig. 2 zeigt im Einzelnen ein (erfindungsgemäßes) Gerät 100 zum Identifizieren eines zu einem Objekt O zugehörigen digitalen Zwillings, wobei der zugehörige digitale Zwilling beispielsweise objektspezifische Daten für das Objekt O umfasst.

Ein Knoten aus Fig. 1 kann z. B. das Gerät 100 umfassen oder als das Gerät 100 ausgebildet sein oder ein Knoten aus Fig. 1 ist über eine Datenleitung oder Kommunikationsnetzwerk mit dem Gerät 100 verbunden.

Das Gerät 100 umfasst zum Identifizieren eines zu einem Objekt zugehörigen digitalen Zwillings TW (TW1, TW2, TW3) ein Erfassungsmodul 110 und ein Selektionsmodul 120 und ein Kommunikationsmodul (z. B. eine Netzwerkschnittstelle) 101, die über einen Bus (z. B. ein PCI Bus, CAN Bus, USB oder Datenleitung) 102 kommunikativ miteinander verbunden sind.

Das Gerät 100 umfasst optional einen Prozessor und/oder ein Berechnungsmodul und/oder ein Kryptographiemodul und/oder ein Schutzmodul, die ggf. bzw. falls vorhanden über den Bus (z. B. ein PCI Bus, CAN Bus, USB oder Datenleitung) 102 ebenfalls kommunikativ miteinander verbunden sind.

Das Erfassungsmodul 110 ist zum Erfassen individueller Merkmale M (diese individuellen Merkmale können z. B. auch als objektindividuelle Merkmale bezeichnet werden) des Objektes O mittels eines Erfassungsgerätes A eingerichtet. Hierzu ist das Erfassungsgerät A über eine Datenverbindung (wireless oder kabelgebunden) (z. B. mit USB, LAN, W-LAN, Bluetooth, Firewire) C mit dem Erfassungsgerät A verbunden. Beispielsweise erfasst/misst das Erfassungsgerät A mittels eines Abtaststrahls Oberflächenunebenheiten als individuelle Merkmale für das Objekt O und überträgt (S11) die individuellen Merkmale an das Erfassungsmodul 110.

Das Selektionsmodul 120 ist zum Auswählen eines digitalen Zwillings TW eingerichtet, wobei die individuellen Merkmale mit einem entsprechenden Referenzwert verglichen werden und bei einer ausreichend genauen Übereinstimmung des Referenzwertes mit den individuellen Merkmalen ein dem Referenzwert zugeordneter digitaler Zwilling TW ausgewählt wird (S1). Alternativ oder zusätzlich wird beispielsweise bei einer ausreichend genauen Übereinstimmung des Referenzwertes mit den individuellen Merkmalen der digitale Zwilling bereitgestellt. Bereitstellen bedeutet in diesem Zusammenhang beispielsweise, dass ein Zugriff auf den ausgewählten digitalen Zwilling erlaubt wird, indem z. B. der digitale Zwilling TW anhand des später erläuterten ersten kryptographischen Schlüssels entschlüsselt wird. Ist der digitale Zwilling bereitgestellt, können z. B. Daten von dem digitalen Zwilling abgerufen werden oder es können Daten über das Objekt O im digitalen Zwilling gespeichert werden. Es kann auch eine Datensynchronisation zwischen dem Objekt O und dem digitalen Zwilling TW durchgeführt werden, wie dies z. B. erläutert wird. Es können beispielsweise auch Steuerfunktionen ausgeführt werden, wie dies beispielsweise später erläutert wird.

Der Referenzwert kann beispielsweise ein Schlüssel für einen Eintrag in einer Zuordnungstabelle (z. B. Hashtabelle) oder einer Datenbank sein, wobei für einen Schlüssel bzw. Referenzwert jeweils ein entsprechender digitaler Zwilling hinterlegt ist.

Sind nun z. B. die individuellen Merkmale erfasst, wird beim Vergleichen z. B. überprüft, ob für die entsprechenden individuellen Merkmale ein zugehöriger Schlüssel (Referenzwert) für einen Eintrag mit einem digitalen Zwilling in der Hashtabelle oder in der Datenbank existiert. Entsprechend kann das Vergleichen der individuellen Merkmale mit dem Referenzwert ein Überprüfen eines Vorhandenseins eines Schlüssels (Referenzwert) für einen Eintrag mit einem digitalen Zwilling sein.

Kann beispielsweise kein digitaler Zwilling identifiziert oder zugeordnet werden, kann beispielsweise ein neuer digitaler Zwilling für das Objekt angelegt werden, wobei die individuellen Merkmale als neuer Referenzwert (Schlüssel) dienen. Der neue digitale Zwilling kann dann ausgewählt oder bereitgestellt werden. Alternativ kann ein allgemeiner digitaler Zwilling ausgewählt oder bereitgestellt. Alternativ kann z. B. das Objekt auch abgelehnt werden und/oder nicht weiterverarbeitet werden und/oder eine Kommunikation mit dem Objekt unterbunden und/oder eine Kommunikation mit dem Objekt eingestellt werden.

Bei weiteren Varianten kann es sich bei dem Referenzwert z. B. um eine Zahlenfolge von mehreren Referenzwerten handeln oder anstatt des Referenzwertes werden mehrere Referenzwerte beim Vergleichen verwenden.

Beim Vergleichen der individuellen Merkmale können beispielsweise Toleranzwerte berücksichtigt werden, um z. B. Messungenauigkeiten des Erfassungsgerätes A zu berücksichtigen.

Hierzu können z. B. eine Vielzahl von digitalen Zwillingen TW (z. B. ein erster digitaler Zwilling TW1, ein zweiter digitaler Zwilling TW2 und ein dritter digitaler Zwilling TW3) in einer Datenbank D oder einer Netzwerkapplikation gespeichert sein.

Ist der erste digitale Zwilling TW1 der zugehörige digitale Zwilling für das Objekt O, so ist der erste digitale Zwilling z. B. über die erfassten individuellen Merkmale M in der Datenbank D identifizierbar. Hierzu können für die entsprechenden individuellen Merkmale M z. B. ein Hashwert, beispielsweise mittels einer Einwegfunktion, ermittelt werden.

Dabei wurde der erste digitale Zwilling TW1 beispielsweise bei der Erstellung des Objektes O oder durch eine vertrauenswürdige Instanz/Entität erzeugt und der entsprechende Referenzwert ermittelt. Der Referenzwert entspricht beispielsweise individuellen Merkmalen, die z. B. bei der Erstellung des Objektes O oder durch die vertrauenswürdige Instanz/Entität ermittelt wurden und vorzugsweise in der Datenbank D (z. B. eine Cloud oder ein Cloud-Service) oder in der Netzwerkapplikation zur Identifikation oder zur Referenzierung oder zur Zuordnung des entsprechenden digitalen Zwillings (z. B. des ersten digitalen Zwillings TW1) gespeichert sind.

Analog zu den erfassten individuellen Merkmalen kann z. B. auch der Referenzwert als Hashwert vorliegen, der z. B. mittels einer Einwegfunktion berechnet wurde.

Dabei ist es vorteilhaft, dass die entsprechenden Merkmale oder Werte nur indirekt vorliegen und somit nicht ohne weiteres kopiert werden können oder ein gefälschtes Objekt erstellt werden kann, ohne dabei z. B. Zugriff auf das originale Objekt O zu haben.

Ist der zugehörige digitale Zwilling (z. B. der erste digitale Zwilling TW1) für das Objekt O ausgewählt, so kann zwischen dem Objekt O und dem ausgewählten digitalen Zwilling TW eine Kommunikationsverbindung (S2) hergestellt werden. Bei der Kommunikationsverbindung kann es sich beispielsweise auch um einen separaten und/oder direkten Kommunikationskanal handeln, der zwischen dem Objekt O und dem digitalen Zwilling erzeugt wird.

Die Kommunikation mit dem Objekt O, der Netzwerkapplikation oder der Datenbank D erfolgt dabei vorzugsweise über das Kommunikationsmodul (z. B. eine Netzwerkschnittstelle) 101.

Ist die Kommunikationsverbindung hergestellt, können verschiedene computergesteuerte Operationen ausgeführt werden.

Beispielsweise kann der ausgewählte digitale Zwilling anhand des Objektes synchronisiert werden. Ist das Objekt beispielsweise ein Produkt/elektronisches Gerät, dessen Zustand (z. B. funktionsfähig, defekt, Wartung notwendig, betriebsbereit) sich ändern kann, und diese Zustandsänderung kann z. B. über die individuellen Merkmale und/oder von dem Objekt O selbst abgefragt werden (z. B. durch eine entsprechende Datenschnittstelle) und/oder über Sensoren oder erfasste Sensorwerte festgestellt werden, kann der entsprechende Zustand oder die entsprechende Zustandsänderung für den ausgewählten digitalen Zwilling aktualisiert bzw. synchronisiert werden.

Es kann beispielsweise aber auch das Objekt O (z. B. ein elektronisches Gerät, ein Gerät wie ein Rechner, eine Fertigungsmaschine, ein Feldgerät, ein Generator, ein Motor, ein IoT Gerät, ein Mobiltelefon oder andere elektronische Bauteile) anhand des digitalen Zwillings synchronisiert werden. Hierzu werden beispielsweise ein Firmwareupdate oder ein Softwareupdate oder eine Aktualisierung von Konfigurationsdateien oder Zugangsberechtigungen vom digitalen Zwilling an das Objekt O übertragen und/oder eingespielt.

Es kann der ausgewählte digitale Zwilling beispielsweise auch anhand des Objektes Steuerfunktionen ausführen. Ist beispielsweise das Objekt O vorhanden und besteht mit dem ausgewählten digitalen Zwilling eine Kommunikationsverbindung, so kann der ausgewählte digitale Zwilling beispielsweise das Objekt O steuern. Ist das Objekt O beispielsweise ein autonom fahrendes Fahrzeug, so kann der digitale Zwilling ein neues Fahrziel mit den Steuerfunktionen einstellen und das Objekt O losfahren lassen. Ist das Objekt O beispielsweise ein Fertigungsroboter, so können über den digitalen Zwilling beispielsweise mittels der Steuerfunktionen Fertigungsschritte des Fertigungsroboters konfiguriert werden.

Es kann beispielsweise aber auch das Objekt O (z. B. ein elektronisches Gerät, ein Gerät wie ein Rechner, eine Fertigungsmaschine, ein Feldgerät, ein Generator, ein Motor, ein IoT Gerät, ein Mobiltelefon oder andere elektronische Bauteile) anhand des ausgewählten digitalen Zwillings Steuerfunktionen ausführen. Beispielsweise kann das Objekt O Steuerfunktionen ausführen, die vom ausgewählten digitalen Zwilling bereitgestellt werden. Dies können beispielsweise Softwarefunktionen oder Funktionen einer App oder Funktionen einer Cloud sein. Hierdurch können beispielsweise Daten von dem Objekt O in den digitalen Zwilling hochgeladen werden oder das Objekt O nutzt eine Softwarefunktion, um beispielsweise Teile einer technischen Anlage (z. B. eine Fertigungsanlage) für das Objekt O zu steuern. Dies kann beispielsweise das Ansteuern eines Förderbandes sein, damit das Objekt O (z. B. ein Schmelzofen) mit Material zum Einschmelzen versorgt wird oder das Objekt O (z. B. ein Fertigungsroboter) mit dem nächsten zu fertigendem Teil versorgt wird.

Die entsprechenden Steuerfunktionen können beispielsweise als Smart-Contract der Netzwerkapplikation realisiert sein.

Das optionale Berechnungsmodul ist zum Berechnen einer objektindividuellen Charakteristik anhand der individuellen Merkmale M eingerichtet. Bei der Berechnung der objektindividuellen Charakteristik können beispielsweise Toleranzwerte berücksichtigt werden, um z. B. Messungenauigkeiten des Erfassungsgerätes A bei der nachfolgend genannten Ermittlung des ersten kryptographischen Schlüssels zu berücksichtigen. Auf das Berechnungsmodul kann beispielsweise in Implementierungsvarianten verzichtet werden, bei denen der kryptographische Schlüssel anhand der individuellen Merkmale bereitgestellt wird.

Das optionale Kryptographiemodul ist zum Bereitstellen eines ersten kryptographischen Schlüssels anhand der individuellen Merkmale und/oder der objektindividuellen Charakteristik eingerichtet.

In einer Variante kann das optionale Kryptographiemodul beispielsweise einen ersten kryptographischen Schlüssel anhand von einer objektindividuellen Charakteristik und/oder anhand der individuellen Merkmale berechnen.

In einer Variante werden die individuellen Merkmale mit dem entsprechenden Referenzwert verglichen (z. B. durch das Kryptographiemodul), wobei bei einer ausreichend genauen Übereinstimmung des Referenzwertes mit den individuellen Merkmalen der erste kryptographische Schlüssel durch das Kryptographiemodul freigegeben wird.

Das Bereitstellen des ersten kryptographischen Schlüssels kann beispielsweise dabei auf unterschiedliche Weise realisiert werden. Es können beispielsweise die individuellen Merkmale und/oder die objektindividuelle Charakteristik mit Referenzwerten oder einem Referenzwert verglichen werden, wobei hier beispielsweise entsprechende Toleranzwerte berücksichtigt werden. Stimmen die individuellen Merkmale und/oder die objektindividuelle Charakteristik mit dem Referenzwert überein (z. B. nach Berücksichtigung der Toleranzwerte), so wird der erste kryptographische Schlüssel z. B. aus einem sicheren Datenspeicher geladen. Der Referenzwert kann beispielsweise während einer Initialisierungsphase und/oder Installationsphase des Gerätes erfasst oder gespeichert werden. Vorzugsweise ist die Initialisierungsphase und/oder oder Installationsphase für das Gerät nur einmalig ausführbar.

Alternativ wird der erste kryptographische Schlüssel anhand der individuellen Merkmale und/oder der objektindividuellen Charakteristik berechnet, indem die individuellen Merkmale und/oder die objektindividuelle Charakteristik als Eingangsdaten für eine Schlüsselableitungsfunktion genutzt werden. Hierbei können auch noch weitere Daten genutzt werden. Beispielsweise kann eine Zeichenfolge (z. B. ein geheimes Passwort) mit den individuellen Merkmalen und/oder der objektindividuellen Charakteristik verknüpft werden, wobei dann beispielsweise diese verknüpften Daten dazu genutzt werden, um mittels einer Schlüsselableitungsfunktion (z. B. PBKDF2) den ersten kryptographischen Schlüssel zu berechnen.

In einer Variante ist die Kommunikationsverbindung und/oder der digitale Zwilling mittels eines kryptographischen Schutzes geschützt.

In einer Variante kann der kryptographische Schutz mit dem ersten kryptographischen Schlüssel erzeugt und/oder überprüft und/oder entfernt werden.

Beispielsweise kann die Kommunikationsverbindung eine sichere Kommunikationsverbindung sein, bei der das Objekt O und der digitale Zwilling jeweils einen kryptographischen Schlüssel benötigen, um die sichere Kommunikationsverbindung herzustellen. Hierbei kann beispielsweise der Referenzwert bzw. die Referenzwerte oder ein abgeleiteter Wert davon (z. B. mittels einer Hashfunktion oder Schlüsselableitungsfunktion) als kryptographischer Schlüssel für die gesicherte Kommunikationsverbindung für den digitalen Zwilling dienen. Die individuellen Merkmale oder ein abgeleiteter Wert davon (z. B. mittels einer Hashfunktion oder Schlüsselableitungsfunktion) können als kryptographischer Schlüssel für die gesicherte Kommunikationsverbindung für das Objekt O dienen.

Für einen Datenaustausch zwischen dem Objekt O und dem zugeordneten digitalen Zwilling kann eine Datenstruktur verwenden werden, die mittels einer kryptographischen Prüfsumme geschützt ist. Die Datenstruktur und die kryptographische Prüfsumme werden beispielsweise in einem Datensatz gespeichert, wobei der Datensatz beispielsweise als Transaktion in dem verteilten Datenbanksystem oder der Netzwerkapplikation gespeichert wird. Hierzu kann die Transaktion eine zusätzliche Prüfsumme (z. B. eine Transaktionsprüfsumme) umfassen, die z. B. mittels eines kryptographischen Schlüssels (z. B. eines privaten kryptographischen Schlüssels) erzeugt wurde, der einer Entität zugeordnet ist oder von dieser genutzt wird. Bei der Entität kann es sich beispielsweise um einen Betreiber, eine Messtation oder Verarbeitungsstation handeln, die das Objekt O steuern, verarbeiten oder verwalten. Der Datensatz kann beispielsweise je nach Implementierung auch eine Nachricht oder Transaktion sein.

Je nach Implementierungsvariante kann die Datenstruktur z. B. auch dem Datensatz entsprechen, wenn z. B. die Datenstruktur ein Datenfeld umfasst, um die kryptographische Prüfsumme zu speichern oder die kryptographische Prüfsumme der Datenstruktur angehängt wird. Wie bereits erläutert, können insbesondere die Datenstruktur und/oder der Datensatz von einer Nachricht oder einer Transaktion gespeichert bzw. umfasst sein. Alternativ kann beispielsweise die Datenstruktur und/oder der Datensatz eine Nachricht oder eine Transaktion sein.

Das optionale Schutzmodul ist in einer weiteren Variante zum kryptographischen Schützen der Datenstruktur mittels der kryptographischen Prüfsumme eingerichtet, wobei das Schutzmodul die kryptographische Prüfsumme mittels des ersten kryptographischen Schlüssels berechnet. Die kryptographische Prüfsumme kann dabei beispielsweise mit einem Keyed-Hash Message Authentication Code (HMAC z. B. unter Verwendung von MD5, SHA1, SHA256) berechnet werden. In weiteren Implementierungsvarianten kann die kryptographische Prüfsumme als digitale Signatur oder als digitales Zertifikat realisiert sein, wobei je nach den verwendeten kryptographischen Verfahren (symmetrischer oder asymmetrische Verfahren), der erste kryptographische Schlüssel beispielsweise als privater Schlüssel fungiert, um die digitale Signatur zu erzeugen. Zum Überprüfen der digitalen Signatur wird beispielsweise der öffentliche Schlüssel von dem ersten kryptographischen Schlüssel abgeleitet und durch eine vertrauenswürdige Instanz bereitgestellt (z. B. einen vertrauenswürdigen Server), so kann in Varianten eine überprüfende Instanz, beispielsweise auf den entsprechenden Schlüssel zugreifen. Ist der private Schlüssel z. B. erzeugt worden und z. B. in einem Speicher des Kryptographiemoduls gespeichert worden, können beispielsweise die entsprechenden individuellen Merkmale des Objektes verändert oder unbrauchbar gemacht werden, sodass der erste kryptographische Schlüssel nicht mehr abgeleitet werden kann. Dies kann beispielsweise dadurch erfolgen, dass bei Oberflächenmerkmalen die entsprechende Position an der Oberfläche des Objektes poliert wird, Farben/Partikel vom Objekt abgewaschen werden (z. B. mittels Lösungsmittel) oder zusätzlich Farben/Partikel auf das Objekt aufgebracht werden, um die entsprechenden individuellen Merkmale unbrauchbar zu machen oder zu verändern. Es ist beispielsweise auch möglich, dass die individuellen Merkmale derart unbrauchbar gemacht werden, dass der erste kryptographische Schlüssel sich nicht mehr direkt anhand dieser berechnen lässt, jedoch noch die objektindividuelle Charakteristik anhand der veränderten individuellen Merkmale unter Berücksichtigung von Toleranzwerten berechnet werden kann, um z. B. den öffentlichen Schlüssel durch das Kryptographiemodul bereitzustellen bzw. zu berechnen.

Alternativ oder zusätzlich kann in einer weiteren Variante der öffentliche Schlüssel ein (digitaler) Fingerabdruck sein, wobei der digitale Fingerabdruck anhand der individuellen Merkmale gebildet werden. Die individuellen Merkmale (z. B. Oberflächenunebenheiten, ein Farbstoff mit einem spezifischen Spektrum, der beispielsweise nach einer vorgegebenen Zeit zerfällt, um insbesondere damit eine Haltbarkeit zu kodieren) können dabei in das Objekt eingearbeitet/eingebracht werden oder auf das Objekt aufgebracht werden. Dieser Fingerabdruck bzw. die individuellen Merkmale sind beispielsweise mit dem bloßen Auge und/oder ohne Kenntnisse über die Art und Position nicht feststellbar/lesbar oder nur mit erheblichem technischem Aufwand feststellbar. Entsprechend können beispielsweise die Informationen (z. B. der Objektdatensatz), um die individuellen Merkmale zu erfassen, in einem geschützten Speicher des Gerätes liegen, sodass kein Zugriff durch Unbefugte auf diese Informationen stattfinden kann. Bei dem eingearbeiteten Fingerabdruck/individuellen Merkmale kann es sich beispielsweise um Oberflächenunebenheiten handeln, die während der Fertigung des Objektes oder der Weiterverarbeitung des Objektes erzeugt werden. Alternativ oder zusätzlich kann in einer weiteren Variante der Fingerabdruck durch das Aufbringen von Farben oder Partikeln realisiert sein, wobei beispielsweise die Farben oder Partikel derart aufgebracht werden, dass ein individuelles Spektrum für das Objekt erzeugt wird. Hierzu können beispielsweise unterschiedliche Farben/Partikel über die Oberfläche des Objektes verteilt werden, sodass beispielsweise ein geometrisches Spektrum erzeugt wird, damit z. B. an bestimmten Positionen des Objektes ein vorgegebenes Spektrum gemessen werden kann. Das Spektrum bzw. die Farben/Partikel sind beispielsweise derart gewählt, dass diese nicht im durch das menschliche Auge sichtbaren Spektrum liegen. Dies kann beispielsweise ein Spektrum sein, das jenseits der 800 nm liegt.

Die Verwendung von Toleranzwerten ist z. B. dahingehend vorteilhaft, um beispielsweise Messungenauigkeiten bei einer Berechnung der Charakteristik oder dem Erfassen der individuellen Merkmale zu berücksichtigen (oder kompensieren). Hierdurch können für das entsprechende korrekte Objekt ggf. die objektindividuelle Charakteristik reproduzierbar berechnet oder die individuellen Merkmale reproduzierbar erfasst werden.

Beispielsweise können in einer weiteren Variante die Toleranzwerte derart gewählt werden, dass bei spektroskopischen individuellen Merkmale eines Objektes z. B. in Form von Lebensmitteln, kein erster kryptographischer Schlüssel bereitgestellt wird (oder kein gültiger erster kryptographischer Schlüssel bereitgestellt werden kann), wenn das Objekt bzw. die Lebensmittel nicht mehr frisch genug sind. Handelt es sich beispielsweise bei dem Objekt um Bananen, so kann der Toleranzwert für das Spektrum der Oberflächen der Bananen derart gewählt werden, dass bei einem großflächigen Braunwerden der Bananen, für diese Bananen kein erster kryptographischer Schlüssel bereitgestellt wird (oder kein gültiger erster kryptographischer Schlüssel bereitgestellt werden kann) oder erzeugt wird. Entsprechend können die Bananen bzw. eine Bananenlieferung mit diesen Bananen an einem Transportpunkt oder bei einem Zwischenhändler nicht mehr als "Frisch" in einer Lieferkette mittels einer Nachricht mit der Datenstruktur oder der Datenstruktur in dem verteilten Datenbanksystem bestätigt/gespeichert werden. Auf die gleiche Weise können in einer weiteren Variante beispielsweise andere Objekte in Form von verderblichen Waren mittels Nachrichten/Datenstrukturen in einem verteilten Datenbanksystem überwacht werden. Die entsprechenden Toleranzwerte werden dann entsprechend gewählt, dass ggf. kein erster kryptographischer Schlüssel bereitgestellt wird, wenn die verderblichen Waren z. B. zu stark degeneriert sind (z. B. die Haltbarkeit von Lebensmitteln abgelaufen ist oder die Lebensmittel verdorben sind). Alternativ kann beispielsweise beim Überschreiten der Toleranzwerte ein alternativer kryptographischer Schlüssel bereitgestellt werden, anhand dessen nachvollzogen werden kann, an welcher Stelle bei der Dokumentation des Transportes des Objektes die Toleranzwerte überschritten wurden. Alternativ oder zusätzlich kann bei einem Überschreiten der Toleranzwerte ein entsprechender digitaler Zwilling für überschrittene Toleranzwerte bereitgestellt werden.

Entsprechend können die genannten Toleranzwerte nicht nur bei der objektindividuellen Charakteristik verwendet werden, sondern sie lassen sich ebenso verwenden, wenn anhand der individuellen Merkmale der erste kryptographische Schlüssel bereitgestellt werden soll. Dies kann beispielsweise notwendig sein, wenn die individuellen Merkmale (die auch als objektindividuelle Merkmale bezeichnet werden können) mit einem Referenzwert verglichen werden sollen, um den ersten kryptographischen Schlüssel bei einer entsprechenden Übereinstimmung freizugeben oder die individuellen Merkmale als Eingabeparameter für eine Schlüsselableitungsfunktion dienen sollen und z. B. Fehler hinsichtlich einer reproduzierbaren Schlüsselableitung aufgrund von Messungenauigkeiten verhindert werden soll.

Die Erfindung kann beispielsweise vorteilhaft im Supply-Chain-Management bzw. beim Überwachen einer Supply-Chain verwendet werden. Insbesondere, wenn beispielsweise bei einem Transport von Objekten (z. B. Waren wie Lebensmittel, elektronische Bauteile, Edelsteile etc.) objektbezogene Daten von den unterschiedlichen Entitäten (z. B. Hersteller, mehrere Logistikfirmen, Vertrieb, Käufer), die z. B. bei der Herstellung, Transport oder dem Verkauf des Objektes beteiligt sind, aus Dokumentationsgründen an unterschiedlichen Stellen der Verarbeitung/Bearbeitung des Objektes und/oder Zeitpunkten erzeugt werden. Die Erfindung ist dabei insbesondere vorteilhaft, wenn sich die beteiligten Entitäten nicht vertrauen, da die entsprechenden Daten z. B. durch die kryptographische Prüfsumme und/oder einer Prüfsumme einer entsprechenden Entität geschützt sind. Das Gerät kann beispielsweise Teil eines Transportbehältnisses sein, um z. B. Lebensmittel wie Bananen oder Milch zu transportieren, oder es sind mehrere gleichartige Geräte an den unterschiedlichen Stellen der Verarbeitung/Bearbeitung des Objektes bzw. den Zeitpunkten beteiligt, wenn dies erfolgt vorhanden.

Beispielsweise werden an einem Verarbeitungsort (z. B. Übergabe des Objektes an das Logistikunternehmen) objektspezifische Daten (z. B. um welche Art von Objekt es sich handelt, Typ, Hersteller, eindeutiger Identifizierer/UID usw., Zeitpunkt der Ankunft beim Logistikunternehmen) erfasst und in einem Objektdatensatz oder Dokumentationsdatensatz gespeichert und sollen z. B. im ausgewählten digitalen Zwilling gespeichert werden. Der Objektdatensatz/Dokumentationsdatensatz kann dann z. B. zum Speichern im digitalen Zwilling in der Datenstruktur gespeichert werden und wie bereits erläutert z. B. mit der kryptographischenn Prüfsumme geschützt werden, indem der erste kryptographische Schlüssel entsprechend der Erläuterungen bereitgestellt wird.

Es ist beispielsweise auch denkbar, dass in einer weiteren Variante der digitale Zwilling zwei unterschiedliche Gruppen von objektspezifischen Daten (auch als Datengruppen bezeichnet) für ein Objekt umfasst.

Diese Datengruppen umfassen beispielsweise veränderliche Daten, die sich auf das Objekt beziehen und unveränderliche Daten, die sich auf das Objekt beziehen. Beispielsweise umfasst die erste Datengruppe unveränderliche Daten für das Objekt, diese können z. B. Art des Objektes (elektronisches Bauteil, Lebensmittel, Rohstoff wie Diamanten), Typ, Hersteller, eindeutiger Identifizierer/UID usw. angeben.

Beispielsweise umfasst die zweite Datengruppe veränderliche Daten für das Objekt. Diese veränderlichen Daten können z. B. die Daten (Name, Adresse, digitale Signatur) der Entität, die das Objekt verarbeitet, Zeitpunkt der Verarbeitung, Arbeitsschritte, Bearbeitungsbedingungen (z. B. Temperaturen bei Transport/Herstellung/Bearbeitung des Objektes), Dauer der Verarbeitung (z. B. Dauer des Transportes, Dauer der Durchführung der Bearbeitungsschritte z. B. bei der Herstellung des Objektes) sein.

Dies hat den Vorteil, dass bei einer Datenkommunikation zwischen dem Objekt und dem ausgewählten digitalen Zwilling ggf. nur Daten im digitalen Zwilling verändert werden können, die der Gruppe der veränderlichen Daten (zweite Datengruppe) zugehören.

Durch die Verwendung der individuellen Merkmale für das Bereitstellen des ersten kryptographischen Schlüssels oder für das Auswählen des zugeordneten digitalen Zwillings, kann ein entsprechendes Objekt, insbesondere ein physisches Objekt, mittels der "digitalen Welt" stärker verknüpft werden. Wird das Objekt beispielsweise zu lange transportiert oder durch die Verarbeitung/Bearbeitung/Transport derart verändert, dass z. B. die entsprechenden Toleranzwerte nicht mehr eingehalten werden, lässt sich die Überschreitung der Toleranzwerte oder eine unsachgemäße Behandlung des Objektes lückenlos z. B. über den digitalen Zwilling nachweisen. Auch lässt sich dabei nachweisen, ob das Objekt beispielsweise durch ein anderes Objekt ausgetauscht wurde, was beispielsweise bei Produktfälschungen relevant ist.

Würde das Objekt nun durch ein gefälschtes Objekt ausgetauscht werden, so würden sich die entsprechenden individuellen Merkmale ändern. Dies kann beispielsweise für Medizinprodukte relevant sein, um herauszufinden, ob es sich z. B. bei einem Silikonimplantat, tatsächlich um das Silikonimplantat eines Herstellers handelt und nicht um ein Implantat, das gefälscht wurde. Hierzu werden z. B. bei der Herstellung des Objektes (Implantat) die entsprechenden Daten für das Objekt nach einer der oben genannten Varianten in das verteilte Datenbanksystem geschrieben. Logistikunternehmen, Vertriebsunternehmen und Kliniken, die das Objekt transportieren, handeln und implantieren, dokumentieren jeweils nach dem genannten Verfahren die entsprechenden durch sie durchgeführten Verarbeitungsschritte, Zeitpunkte und weiteren relevanten Daten (Angaben zur jeweiligen Entität). Bei den individuellen Merkmalen eines Implantates kann es sich beispielsweise um Oberflächenmerkmale des Implantates handeln (z. B. Oberfläche des Silikonkissens oder die Oberfläche eines metallischen Implantates). Bei dem Silikonkissen kann es sich beispielsweise auch bei den individuellen Merkmalen um ein gemessenes Spektrum des Inhaltes (Silikon) des Silikonkissens handeln. Die Erfindung ist nicht nur auf Silikonkissen beschränkt. Auch andere Implantate mit anderen Füllungen können ebenso überprüft werden. Auch ist es möglich, hierdurch die Authentizität von anderen Medizinprodukten wie Medikamenten (z. B. über Spektren) oder medizintechnische Geräte wie MRTs, CTs und deren elektronische Bauteile (z. B. mittels Testsignalen oder Rauschsignalen) zu überprüfen.

Auch kann das Gerät unterschiedliche individuelle Merkmale nutzen, wobei die individuellen Merkmale vorzugsweise einen vorgegebenen Schlüssel kodieren (z. B. als Fingerabdruck). Die unterschiedlichen individuellen Merkmale befinden sich dann z. B. an unterschiedlichen, vorzugsweise zufällig ausgewählten, Positionen am Objekt. Diese Positionen können ggf. in einem Objektdatensatz gespeichert werden.

Alternativ können die individuellen Merkmale nicht zufällig festgelegt werden, sondern befinden sich bei einem entsprechenden Objekt an einer bekannten/vergebenen Position (z. B. am Sockel des Objektes oder an unebenen Bereichen eines Werkstücks) .

Die Fig. 3 zeigt ein weiteres Ausführungsbeispiel der Erfindung, das als Ablaufdiagramm für ein Verfahren dargestellt ist.

Das Verfahren ist vorzugsweise computerimplementiert realisiert.

Im Einzelnen wird in diesem Ausführungsbeispiel ein Verfahren zum computerimplementierten Verfahren zum Identifizieren eines zu einem Objekt zugehörigen digitalen Zwillings gezeigt. Alternativ oder zusätzlich ist das computerimplementierte Verfahren ein Verfahren zum Herstellen einer Kommunikation zwischen einem digitalen Zwilling und einem Objekt.

Das Verfahren umfasst einen ersten Verfahrensschritt 310 zum Erfassen individueller Merkmale eines Objektes mittels eines Erfassungsgerätes.

Das Verfahren umfasst einen zweiten Verfahrensschritt 320 zum Auswählen eines digitalen Zwillings, wobei die individuellen Merkmale mit einem entsprechenden Referenzwert verglichen werden und bei einer ausreichend genauen Übereinstimmung des Referenzwertes mit den individuellen Merkmalen ein dem Referenzwert zugeordneter digitaler Zwilling ausgewählt wird.

Ein weiteres Ausführungsbeispiel der Erfindung, das nicht in einer Fig. gezeigt ist, betrifft ein Verfahren zum rechnergestützten Überprüfen einer kryptographischen Prüfsumme. Die Erfindung betrifft ein Ökosystem von Geräten, die mittels einer Blockkette oder Netzwerkapplikation miteinander autonom interagieren. Insbesondere wird mittels der Erfindung mit einer verteilten Infrastruktur (z. B. die Netzwerkapplikation) eine sicherheitsgeschützte Datenverarbeitung von Sensordaten oder Messdaten für ein Objekt realisiert. Anwendungsgebiete sind hierbei Supply-Chain-Szenarien oder industrielle Steueranwendungen von Blockketten.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

## Patentansprüche

1. Gerät zum Identifizieren eines zu einem Objekt zugehörigen digitalen Zwillings aufweisend:
- ein Erfassungsmodul (110) zum Erfassen individueller Merkmale (M) eines Objektes (O) mittels eines Erfassungsgerätes (A);
- ein Selektionsmodul (120) zum Auswählen eines digitalen Zwillings, wobei
- die individuellen Merkmale mit einem entsprechenden Referenzwert verglichen werden,
- bei einer ausreichend genauen Übereinstimmung des Referenzwertes mit den individuellen Merkmalen ein den Referenzwerten zugeordneter digitaler Zwilling ausgewählt wird,
- beispielsweise bei einer ausreichend genauen Übereinstimmung des Referenzwertes mit den individuellen Merkmalen der digitale Zwilling bereitgestellt wird.

2. Gerät nach Anspruch 1, wobei
- das Gerät ein Kryptographiemodul umfasst,
- das Kryptographiemodul beispielsweise einen ersten kryptographischen Schlüssel anhand von einer objektindividuellen Charakteristik und/oder anhand der individuellen Merkmale berechnet.

3. Gerät nach einem der vorhergehenden Ansprüche, wobei
- die individuellen Merkmale mit dem entsprechenden Referenzwert verglichen werden,
- bei einer ausreichend genauen Übereinstimmung des Referenzwertes mit den individuellen Merkmalen der erste kryptographische Schlüssel durch das Kryptographiemodul freigegeben wird.

4. Gerät nach einem der vorhergehenden Ansprüche, wobei zwischen dem Objekt und dem ausgewählten digitalen Zwilling eine Kommunikationsverbindung hergestellt wird.

5. Gerät nach einem der vorhergehenden Ansprüche, wobei
- die Kommunikationsverbindung und/oder der digitale Zwilling mittels eines kryptographischen Schutzes geschützt ist.

6. Gerät nach einem der Ansprüche 2 - 5, wobei
- der kryptographische Schutz mit dem ersten kryptographischen Schlüssel erzeugt und/oder überprüft und/oder entfernt werden kann.

7. Gerät nach einem der vorhergehenden Ansprüche, wobei
- der Referenzwert ein Referenzhashwert oder ein eindeutiger Identifizierer ist, der beispielsweise für einen/den gespeicherte Referenzwert gebildet wurde,
- die objektindividuellen Merkmale ein Objekthashwert oder ein eindeutiger Identifizierer sind, die beispielsweise beim Erfassen der objektindividuellen Merkmale gebildet wurden bzw. werden.

8. Gerät nach einem der vorhergehenden Ansprüche, wobei
- der Referenzwert bei einem Erzeugen des digitalen Zwillings festgelegt wird,
- der Referenzwert insbesondere beim Erzeugen des digitalen Zwillings diesem zugeordnet wird, sodass der digitale Zwilling beispielsweise bei einem Übereinstimmen des Referenzwertes mit den objektindividuellen Merkmalen ausgewählt werden kann.

9. Gerät nach einem der vorhergehenden Ansprüche, wobei
- der ausgewählte digitale Zwilling anhand des Objektes synchronisiert wird, und/oder
- das Objekt anhand des ausgewählten digitalen Zwillings synchronisiert wird.

10. Gerät nach einem der vorhergehenden Ansprüche, wobei
- der ausgewählte digitale Zwilling anhand des Objektes Steuerfunktionen ausführt, und/oder
- das Objekt anhand des ausgewählten digitalen Zwillings Steuerfunktionen ausführt.

11. Gerät nach einem der vorhergehenden Ansprüche, wobei
- der ausgewählte digitale Zwilling und weitere digitale Zwillinge in einer Netzwerkapplikation oder einer verteilten Datenbank gespeichert sind,
- das verteilte Datenbanksystem beispielsweise eine Blockkette ist,
- das Gerät beispielsweise als Knoten oder Orakel des verteilten Datenbanksystems ausgebildet ist,
- die kryptographische Prüfsumme beispielsweise eine digitale Signatur ist.

12. Gerät nach einem der vorhergehenden Ansprüche, wobei
- das Gerät beispielsweise ein Berechnungsmodul umfasst,
- das Berechnungsmodul beispielsweise zum Berechnen einer objektindividuellen Charakteristik anhand der individuellen Merkmale eingerichtet ist,
- die Charakteristik beispielsweise unter Berücksichtigung vorgegebener Toleranzwerte der individuellen Merkmale berechnet wird,
- beispielsweise die Charakteristik und/oder die individuellen Merkmale mit dem entsprechenden Referenzwert verglichen werden,
- beispielsweise bei einer ausreichend genauen Übereinstimmung des Referenzwertes mit der Charakteristik und/oder der individuellen Merkmale der erste kryptographische Schlüssel durch das Kryptographiemodul freigegeben wird,
- das Gerät beispielsweise ein Monitoringmodul umfasst,
- beispielsweise das Monitoringmodul dazu eingerichtet ist das Gerät zu überwachen und insbesondere Informationen der Überwachung in eine Datei oder in einer Datenstruktur zu speichern.

13. Gerät nach einem der vorhergehenden Ansprüche, wobei
- der digitale Zwilling und/oder das Objekt und/oder das Gerät einen Objektdatensatz umfasst,
- der Objektdatensatz angibt, an welchen geometrischen Stellen und/oder Schnittstellen das Erfassungsgerät die individuellen Merkmale erfassen kann,
- der Objektdatensatz beispielsweise die individuellen Merkmale und/oder die objektindividuelle Charakteristik in verschlüsselter Form umfasst,
- beispielsweise die verschlüsselten die individuellen Merkmale und/oder die objektindividuelle Charakteristik mittels des ersten kryptographischen Schlüssels werden können.
- der Objektdatensatz beispielsweise weitere Objektdaten umfasst, wie beispielsweise Messwerte des Objektes, Messwerte über das Objekt, Herstellungsangaben des Objektes, Aufenthaltsorte des Objektes,
- die weiteren Objektdaten beispielsweise von Sensoren des Gerätes für das Objekt erfasst werden,
- die Sensoren beispielsweise ein GPS-Modul sind und/oder Temperatursensoren und/oder optische Sensoren sind, die beispielsweise entsprechende Eigenschaften von dem Objekt erfassen.

14. Computerimplementiertes Verfahren zum Identifizieren eines zu einem Objekt zugehörigen digitalen Zwillings mit folgenden Verfahrensschritten:
- Erfassen individueller Merkmale (M) eines Objektes (O) mittels eines Erfassungsgerätes (A);
- Auswählen eines digitalen Zwillings, wobei
- die individuellen Merkmale mit einem entsprechenden Referenzwert verglichen werden,
- bei einer ausreichend genauen Übereinstimmung des Referenzwertes mit den individuellen Merkmalen ein dem Referenzwert zugeordneter digitaler Zwilling ausgewählt wird,
- beispielsweise bei einer ausreichend genauen Übereinstimmung des Referenzwertes mit den individuellen Merkmalen der digitale Zwilling bereitgestellt wird.

15. Computerprogrammprodukt mit Programmbefehlen zur Durchführung des Verfahrens nach Ansprüche 14.

16. Bereitstellungsvorrichtung für das Computerprogrammprodukt nach Anspruch 15, wobei die Bereitstellungsvorrichtung das Computerprogrammprodukt speichert und/oder bereitstellt.
